Europäisches Patentamt

European Patent Office

Office européen des brevets

(19)

(11) Numéro de publication: **0 064 460**
A1

# (12) DEMANDE DE BREVET EUROPEEN

(21) Numéro de dépôt: 82400765.2

(22) Date de dépôt: 28.04.82

(51) Int. Cl.³: **G 02 F 1/17**

(30) Priorité: 30.04.81 FR 8108686

(43) Date de publication de la demande:
10.11.82 Bulletin 82/45

(84) Etats contractants désignés:
AT BE CH DE GB IT LI LU NL SE

(71) Demandeur: JAEGER
2, rue Baudin
F-92303 Levallois-Perret(FR)

(72) Inventeur: Pompei Katz de Warrens, Jean
7, résidence de la Gaillarderie
F-78590 Noisy-le-Roi(FR)

(74) Mandataire: Corre, Jacques Denis Paul et al,
Cabinet Regimbeau 26, Avenue Kléber
F-75116 Paris(FR)

(54) Electrolyte multiconstituant à potentiel défini et cellule d'affichage le contenant.

(57) La présente invention concerne un nouvel électrolyte multiconstituant à potentiel défini et cellule d'affichage le contenant.

Selon l'invention, l'électrolyte liquide multiconstituant à potentiel défini pour cellule d'affichage électrolytique, du type à base d'au moins un iodure métallique dissous dans un solvant organique anhydre, est caractérisé en ce qu'il comprend les trois constituants fonctionnels suivants : un premier élément métallique $M_p$ qui donne au moins deux iodures correspondant à des valences différentes, et qui est destiné à assurer l'équilibre entre les formes réduites de l'iode $I^-$ et $I_3^-$; un iodure d'un second métal $M_t$, à l'état pratiquement totalement dissocié destiné à fixer la concentration de l'électrolyte en espèce anionique $I^-$; un iodure d'un troisième métal $M_x$ constituant le véhicule de l'affichage.

EP 0 064 460 A1

Electrolyte multiconstituant à potentiel défini et
cellule d'affichage le contenant

La présente invention concerne un nouvel électrolyte
liquide multiconstituant à potentiel défini, destiné en
particulier aux cellules d'affichage électrolytique.
L'électrolyte selon l'invention est du type général à
base d'au moins un iodure métallique dissous dans un
solvant organique de préférence parfaitement anhydre.

La présente invention a eu pour objet la mise au
point d'un électrolyte à potentiel défini destiné à
permettre, en particulier dans un afficheur à électrolyte
liquide, d'assurer les diverses fonctions suivantes :

. permettre le dépôt sélectif d'un ou de plusieurs
métaux, de façon simultanée ou non ;

. permettre une dissolution de ce dépôt métallique
sans faire apparaître de l'iode au cours de la réaction
de dissolution ;

. obtention soit d'une mémoire nulle, soit d'une
mémoire infinie de la cellule d'affichage.

Ces divers objectifs n'ont jamais pu être atteints
dans la technique antérieure. La présente invention a en
revanche permis d'obtenir des résultats parfaitement satisfaisants en faisant appel à des électrolytes multi-constituants à potentiel défini, caractérisés en ce qu'ils comprennent les trois constituants suivants, chacun responsable d'une fonction bien spécifique :

a) un premier élément métallique $M_p$ qui donne au moins deux iodures correspondant à des valences différentes, et qui est ainsi destiné à assurer l'équilibre entre les formes réduites de l'iode $I^-$ et $I_3^-$ ;

b) un iodure d'un second élément métallique $M_t$, présent à l'état pratiquement totalement dissocié, destiné à fixer la concentration de l'électrolyte en espèce anionique $I^-$, et

c) un iodure d'un troisième élément métallique $M_x$, constituant le véhicule d'affichage.

L'élément métallique $M_p$ pourra être choisi parmi Tl, Cu, Hg, Au, Sn, Fe, Co, Ti, Cr, Mn, Sb et In.

Le second élément métallique $M_t$ doit avoir un potentiel d'ionisation d'iodure positif ($\frac{1}{i} \frac{\overline{E^0}}{\delta y} > 0$ pour un iodure $M_y I_i$). Les éléments $M_t$ seront plus spécifiquement choisis par les métaux alcalins et alcalino-terreux.

Le troisième élément métallique $M_x$ pourra être choisi parmi : Zn, Cd, Tl, Pb, Cu, Ag, Hg, Au, Sn, Fe, Ni, Co, Ti, Cr, Mn, Sb et In.

D'autres caractéristiques et avantages de la présente invention apparaîtront à la lecture de la description plus détaillée de l'invention faite ci-après.

L'électrolyte multiconstituant précédemment défini peut être le siège, selon les valeurs respectives des concentrations des différents constituants, de trois types d'-équilibres d'oxydo-réduction entre les diverses espèces ionisées et les iodures non dissociés. Ces divers équilibres, ont été désignés respectivement par $\alpha$, $\beta$ et $\gamma$. Ils donnent lieu à des réactions d'oxydation et de réduction conduisant respectivement à un dépôt métallique et à sa dissolution. A chacune de ces réactions correspond un potentiel d'électrode appelé respectivement potentiel d'écriture $(E_w)$ et potentiel d'effacement $(E_d)$. Il existe, pour chacun de ces trois équilibres d'oxydo-réduction entre espèces ionisées, un équilibre entre le ou les éléments à déposer et les autres constituants, ionisés ou sous forme d'iodure, de l'électrolyte auquel correspond un potentiel mémoire ou potentiel d'électrode flottante $(E_f^0)$. Si l'on prend comme référence ce potentiel, les tensions d'écriture et les tensions d'effacement seront les différences de potentiels d'électrode correspondantes. Les planches $n^{os}$ 1 à 3 annexées à la présente description, donnent les équilibres d'oxydoréduction $\alpha$, $\beta$ et $\gamma$ (les notations utilisées seront précisées ultérieurement dans la présente description).

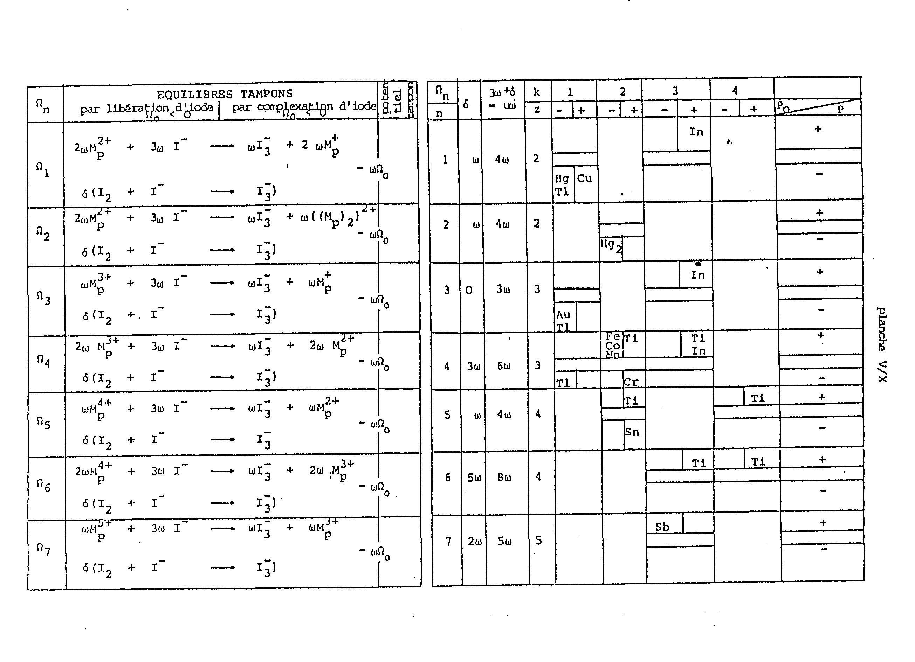

On s'aperçoit que l'iodure $M_pI_k$ intervient à deux niveaux : par ses espèces oxydées pour assurer l'équilibre des espèces réduites de l'iode ($I^-$ et $I_3^-$) d'une part, sous forme non dissociée en équilibre avec les constituants de l'électrolyte autres que $I^-$ et $I_3^-$, et la forme la plus oxydée de $M_p$ d'autre part. Le premier équilibre est un équilibre tampon. Caractéristique de l'élément $M_p$, la planche n° 5 annexée à la présente description donne la liste des équilibres tampon associés aux différents éléments $M_p$. Ils sont répartis en quatre catégories suivant le degré d'oxydation k de l'élément $M_p$ dans son iodure :

| | | |
|---|---|---|
| k = 1 | 1ère catégorie | Tl, Hg, Cu, Au |
| k = 2 | 2ème catégorie | Hg, Fe, Co,Cr,Mn,Sn,Ti |
| k = 3 | 3ème catégorie | In, Sb, Ti |
| k = 4 | 4ème catégorie | Ti |

A l'intérieur d'une catégorie un élément $M_p$ peut donner lieu à plusieurs équilibres tampons s'il dispose d'un nombre de degrés d'oxydation supérieur à deux comme Tl pour la première et In pour la troisième. S'il dispose de plusieurs iodures, il donne lieu aux équilibres tampons appartenant à plusieurs catégories, comme le titane et le mercure. Ce dernier cependant peut être considéré comme appartenant à la deuxième catégorie en raison de la dimérisation de l'ion monovalent mais peut être traité dans la première catégorie car ces deux iodures ont des caractéristiques électrochimiques identiques. Ces équilibres ne jouent leur rôle que lorsqu'ils sont associés à l'équilibre entre l'iode et ses espèces réduites. Le rapport pondéral $\delta$ entre ces deux équilibres est fixé par la condition de neutralité électrique de chacun des membres de l'équilibre tampon.

Le second équilibre est un équilibre fonctionnel, et c'est précisément lui qui permet de distinguer entre eux les trois équilibres $\alpha$, $\beta$ et $\gamma$ .

Dans le second membre de l'équilibre fonctionnel ($\alpha$) l'iodure $M_p I_k$ se trouve associé à l'iodure de l'élément $M_t$ et au cation de l'élément $M_x$.

Dans le second membre de l'équilibre fonctionnel ($\beta$) l'iodure $M_p I_k$ se trouve associé aux cations des éléments $M_t$ et $M_x$.

Dans le premier membre de l'équilibre fonctionnel ($\gamma$) l'iodure $M_p I_k$ se trouve associé à l'iodure de l'élément $M_x$ et au cation de l'élément $M_t$.

Aussi, les réactions d'écriture et d'effacement pourront faire intervenir le passage de $M_p^{k+}$ à l'état élémentaire et à l'état le plus oxydé sans que cela apparaisse dans le bilan électrochimique.

On aboutit ainsi aux trois conséquences suivantes :

1 - l'échelle des potentiels d'électrode peut être modifiée par rapport à celle des réactions d'electrolyse en phase aqueuse ;

2 - le rendement faradaïque peut être supérieur à 1, et être différent à l'écriture et à l'effacement (cas de l'équilibre $\beta$) ; et

3 - l'iode n'intervient plus dans le mécanisme de l'affichage nécessairement.

L'action de masse permet une sélection des éléments $M_p$ et $M_x$ suivant le type d'équilibre fonctionnel considéré.

Comme l'iodure de l'élément $M_t$ est pratiquement totalement dissocié, on retrouve les constituants les plus stables dans le même membre de l'équilibre fonctionnel que lui.

Ainsi pour ($\alpha$)     $M_p I_k$ et $M_x^{j+}$     (j étant le degré d'oxydation de $M_x$)

pour ($\beta$)     $M_p^{k+}$ et $M_x I_j$

pour ($\gamma$)     $M_p^{k+}$ et $M_x^{j+}$

Ceci signifie que dans l'équilibre ($\alpha$) $M_p I_k$ est moins dissociable que $M_x I_j$, dans l'équilibre ($\beta$) $M_x I_j$ est moins dissociable que $M_p I_k$ et dans l'équilibre ($\gamma$) $M_x I_j$ et $M_p I_k$ sont dissociables mais moins que $M_t I_\ell$.

Enfin, les associations de constituants de l'élec- trolyte selon l'invention doivent être faites de telle sorte que l'équilibre de l'électrolyte soit stable, c'est-à-dire que l'ensemble des réactions d'oxydo- réduction dont il est le siège conduisent à un potentiel d'oxydo-réduction négatif.

Dans le cas des équilibres tampons relatifs aux électrolytes de type $(\alpha)$, $(\beta)$ et $(\gamma)$, le potentiel d'oxydoréduction est $-\omega\Omega_o$ , $\omega$ étant le rapport pondéral entre l'équilibre tampon et l'équilibre fonctionnel. Il est déterminé par le nombre d'ions $I^-$ libérés par l'équilibre fonctionnel. La somme des ions $I^-$ libérés à la fois par l'équilibre fonctionnel et l'équilibre d'iode est égale à $3\omega + \delta$ . Comme $\delta$ s'exprime en fonction de $\omega$, la somme des ions $I^-$ libérés est égale à $u\omega$ , $u$ étant un nombre entier caractéristique de l'équilibre tampon $(\Omega_n)$ et étant fonction des degrés d'ionisation $k$ et $z$ des éléments $M_p$. Il existe sept équilibres tampons référencés de $\Omega_1$ à $\Omega_7$ sur la planche n°5.

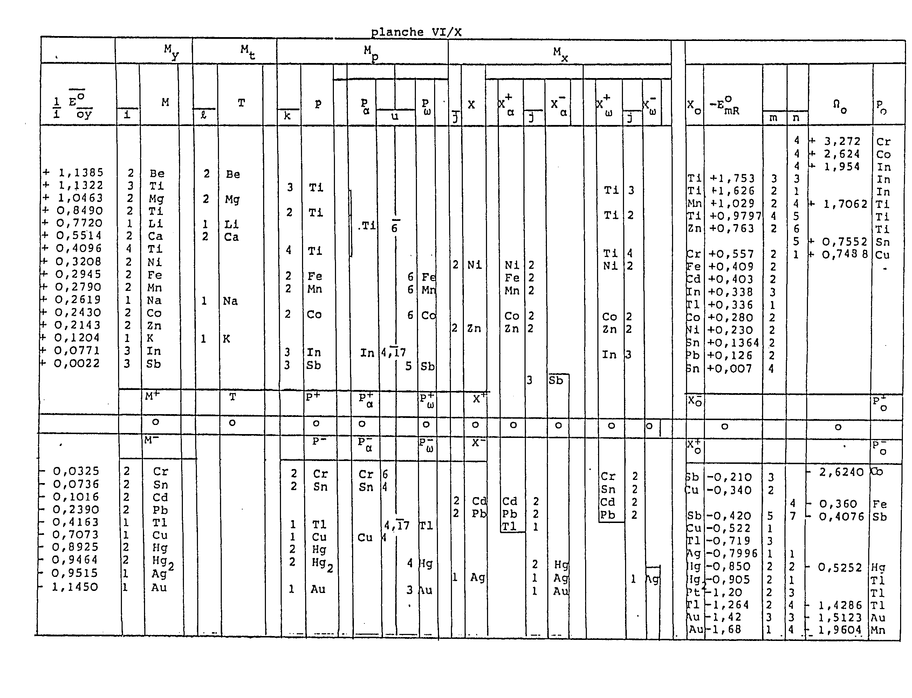

La planche n° 6 représente un tableau de valeurs des potentiels d'ionisation d'iodure des ensembles d'éléments :

$M_t$ (T)
$M_x$ (X et $X_o$)
$M_p$ (P et $P_o$)

La planche 6 comporte également un ensemble $P_o$ où les éléments $M_p$ sont classés par $\Omega_o$ décroissants.

Les seuls éléments $M_p$ favorisant les équilibres $(\alpha)$, $(\beta)$ et $(\gamma)$ sont Cr, In, Ti, Sn et Cu. Leur $\Omega_o$ est positif, ce qui implique que l'équilibre tampon tend à stabiliser l'espèce la moins oxydée de l'élément $M_p$ et par voie de conséquence favoriser la complexation de l'iode en $I_3^-$.

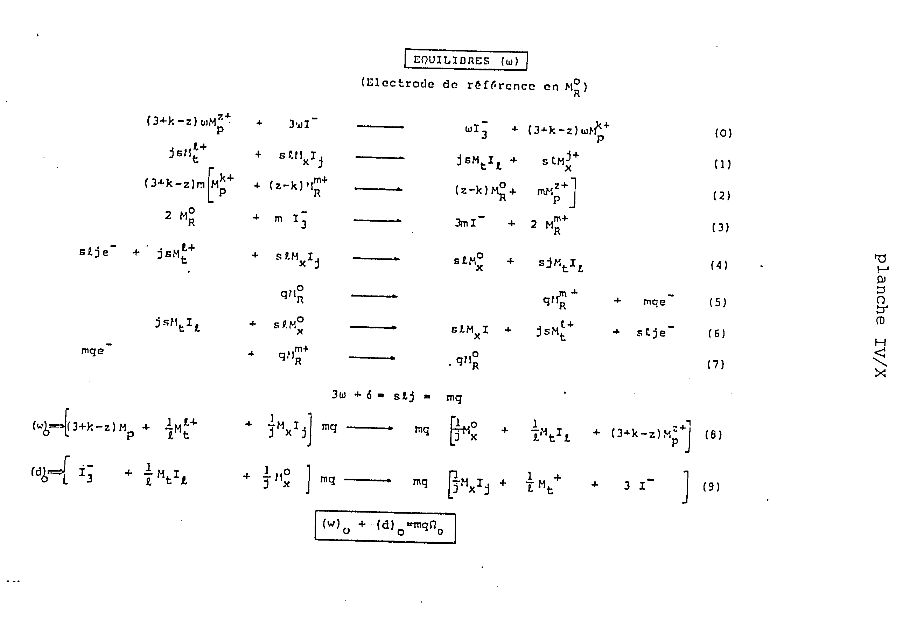

En revanche, les éléments $M_p$ à $\Omega_o < O$ (Fe, Sb, Hg, Co, Tl, Au et Mn) tendent à libérer l'iode. Aussi, pour contrôler cette libération d'iode on a été conduit à leur associer une électrode de référence $M_R$. Il s'établit alors un équilibre entre ladite surface et son espèce oxydée (dans le cas d'une surface métallique) ou son espèce réduite (dans le cas d'un métalloïde tel que l'iode) d'une part, et les espèces de même signe de l'équilibre tampon d'autre part. Pour que la neutralité électrique soit assurée et que le potentiel de la surface soit pris comme référence, il suffit que le rapport pondéral $\omega$ entre équilibre tampon et équilibre fonctionnel soit égal à 1. Un tel électrolyte est dénommé électrolyte de type ($\omega$) et se trouve illustré à la planche n° 4.

Sur cette planche annexée correspondant à l'équilibre ($\omega$), les réactions (0) et (1) correspondent respectivement aux équilibres tampon et fonctionnel de l'électrolyte ($\omega$).

Les réactions (2) et (3) correspondent aux réactions avec l'électrode de référence.

Les réactions (4) et (5) correspondent à des réactions fonctionnelles ou réactions d'électrolyse permettant d'assurer le phénomène d'écriture.

Les réactions (6) et (7) sont également des réactions fonctionnelles ou réactions d'électrolyse destinées à permettre l'effacement de l'affichage.

Enfin les réactions (8) et (9) sont des réactions d'équilibre d'oxydo-réduction respectivement d'écriture et d'effacement.

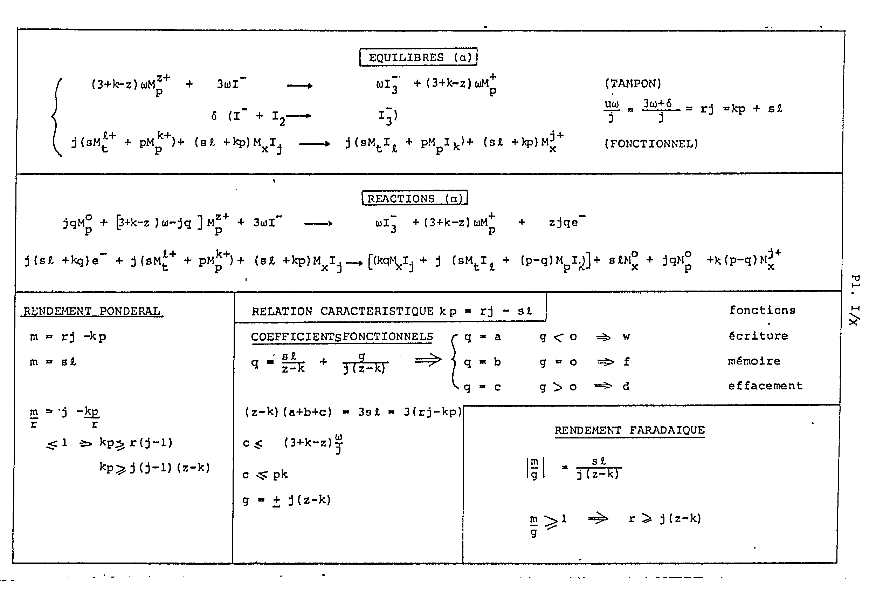

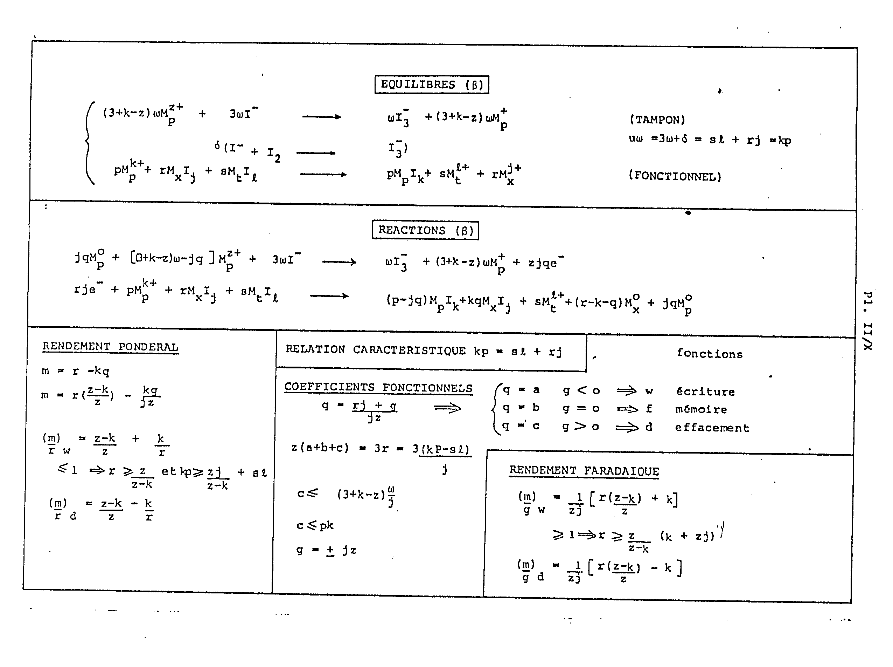

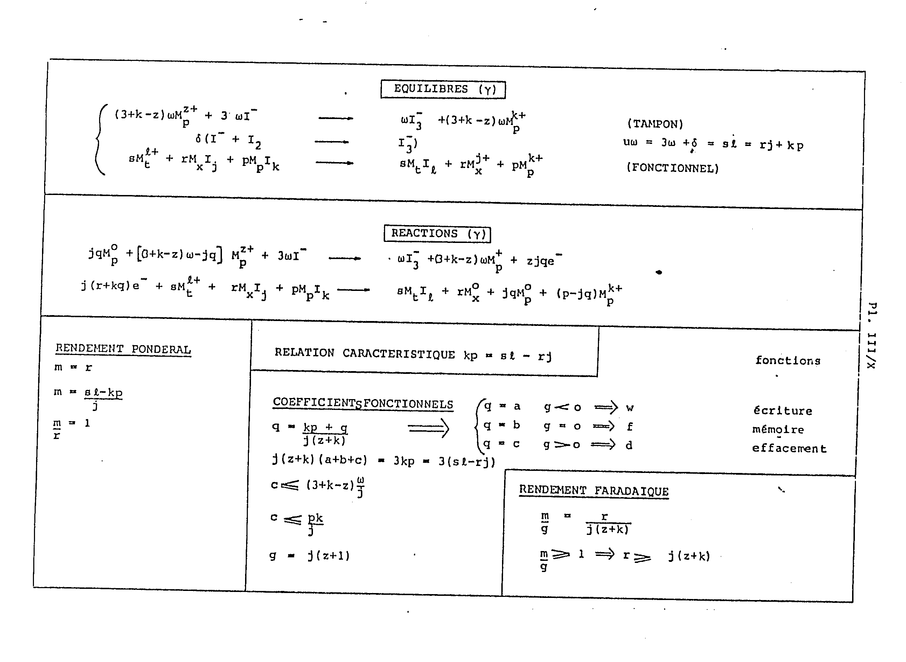

Les notations utilisées dans les planches 1 à 4 sont les suivantes :

L'élément $M_p$ a deux degrés d'oxydation (z et k) et un seul iodure stable $M_p I_k$

L'élément $M_t$ a un seul degré d'oxydation ($\ell$) et un seul iodure stable $M_t I_\ell$

L'élément $M_x$ a un seul degré d'oxydation (j) et un seul iodure stable $M_x I_j$

Dans l'équilibre fonctionnel les iodures sont affectés de coefficients entiers

$$p \quad \text{pour} \quad M_p I_k$$
$$r \quad \text{pour} \quad M_x I_j$$
$$s \quad \text{pour} \quad M_t I_\ell$$

m   est le nombre d'atomes d'élément $M_x$ figurant dans les réactions d'oxydation et de réduction à l'écriture et à l'effacement

g   est le nombre d'électrons mis en jeu dans ces réactions

$\dfrac{m}{r}$   est le rendement pondéral $\tau_m$

$\dfrac{m}{g}$   est le rendement faradaïque $\tau_F$

L'électrolyte est toujours caractérisé par une relation caractéristique entre les coefficients $k_p$, $s\ell$ rj et uω, précisés sur chaque planche. Les réactions fonctionnelles sont symbolisées par le coefficient général q.

La valeur de  q  pour l'écriture est                a   entier
                      pour l'équilibre flottant   b    "     positif
                      pour l'effacement           c    "     positif

Pour l'équilibre (ω) 2q est un nombre entier

Les potentiels standard sont notés :

$E_e^O$   pour l'équilibre d'oxydo-réduction de l'électrolyte

$E_q^O$   pour les potentiels d'électrodes, et plus précisément

$E_f^O$   pour l'électrode flottante.

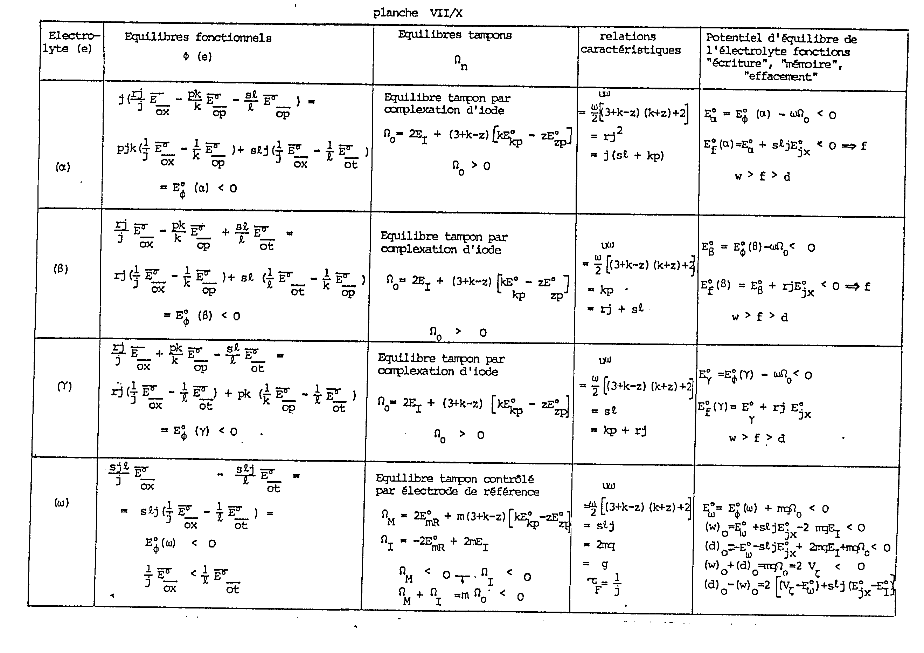

Dans le cas de chaque type d'équilibre, le potentiel d'oxydoréduction correspondant aux équilibres fonctionnels $\Phi(e)$ doit être négatif. La planche 7 regroupe toutes les conditions à satisfaire pour obtenir des équilibres de type $(\alpha)$, $(\beta)$, $(\gamma)$ et $(\omega)$.

L'ensemble des équilibres tampon  et fonctionnel donne lieu à un équilibre d'oxydoréduction global, dont le potentiel standard est défini et de valeur négative. Il s'agit du potentiel d'électrolyte $E_e^O$.

Pour les équilibres $(\alpha)$, $(\beta)$ et $(\gamma)$ il existe, outre le potentiel d'électrolyte $E_e^O$, un autre potentiel d'oxydo-réduction noté $E_f^O$ qui correspond au potentiel standard d'une électrode $M_x$ plongé  dans l'électrolyte. $E_f^O$ est également appelé potentiel flottant ou potentiel mémoire.

En ce qui concerne l'équilibre $(\omega)$, il existe deux équilibres d'oxydoréduction, l'un correspondant à l'écriture de potentiel $(w)_o$ et l'autre à l'effacement de potentiel $(d)_o$. On définit en outre un potentiel indifférent $V_\zeta$ pour lequel il n'y a ni écriture, ni effacement, et dont la valeur est :

$$V_\zeta = \frac{(w)_o + (d)_o}{2}$$

Pour faciliter la détermination de ces différents potentiels, les différences de potentiels d'ionisation ont été répertoriées comme suit.

Potentiel d'ionisation de l'élément $M_y$ :

$$E_{iy}^O \implies ie^- + M_y^{i+} \longrightarrow M_y^O + E_{iy}^O$$

Potentiel d'ionisation de l'iodure de l'élément $M_y$ :

$$\frac{1}{i}\overline{E_{oy}^O} \implies \frac{1}{i}M_yI_i \longrightarrow \frac{1}{i}M_y^{i+} + I^- + \frac{1}{i}\overline{E_{oy}^O}$$

On définit également un potentiel $E_I$ correspondant à la réaction

$$2e^- + I_3^- \longrightarrow 3I^- + E_I^O$$

$$E_I^O = + 0,5336 \text{ Volt}$$

$$\left.\begin{array}{l}\overline{E_{px}} = \frac{i}{j}\overline{E_{ox}^O} - \frac{i}{k}\overline{E_{op}^O} = -\overline{E_{xp}}\\[2mm]\overline{E_{tp}} = \frac{i}{k}\overline{E_{op}^O} - \frac{i}{\ell}\overline{E_{ot}^O} = -\overline{E_{pt}}\\[2mm]\overline{E_{xt}} = \frac{1}{\ell}\overline{E_{ot}^O} - \frac{1}{j}\overline{E_{ox}^O} = -\overline{E_{tx}}\end{array}\right\} \overline{E_{px}} + \overline{E_{tp}} + \overline{E_{xt}} = -\overline{E_{tx}} - \overline{E_{pt}} - \overline{E_{xp}} = 0$$

A l'aide de ces nouvelles notations la planche n° 7 peut être simplifiée de la manière indiquée au tableau ci-après.

## TABLEAU I

| e | (α) | (β) | (γ) | (ω) |
|---|---|---|---|---|
| $E_\phi^o(e) < O$ | $\omega u \overline{E_{px}} + s\ell j \ \overline{E_{tp}} < O$ | $-\omega u \overline{E_{tp}} + rj E_{tx} < O$ | $\omega u \overline{E_{tp}} + rj \overline{E_{tx}} < O$ | $s\ell j \ \overline{E_{tx}} < O$ |
| $\Omega_n < O$ | $-\omega\Omega_o < O$ | $-\omega\Omega_o < O$ | $-\omega\Omega_o < O$ | $mq\Omega_o < O$ |
| $E_e^o < O$ | $\omega(u\overline{E_{px}} - \Omega_o) + s\ell j \overline{E_{tp}} < O$ | $-\omega(u\overline{E_{tp}} + \Omega_o) + rj\overline{E_{tx}} < O$ | $\omega(u\overline{E_{tp}} - \Omega_o) + rj\overline{E_{px}} < O$ | $s\ell j \ \overline{E_{tx}} + V_\zeta = u\omega\overline{E_{tx}} + mq\Omega_o < O$ |
| $E_f^o(e) < O$ | $\omega(u\overline{E_{px}} - \Omega_o) + s\ell j (E_{jx}^o + \overline{E_{tp}}) < O$ | $\dot\omega(-u\overline{E_{tp}} - \Omega_o) + rj(E_{jx}^o + \overline{E_{tx}}) < O$ | $\omega(u\overline{E_{tp}} - \Omega_o) + rj(E_{jx}^o + \overline{E_{px}}) < O$ | $(w)_o = V_\zeta + s\ell j(\overline{E_{tx}} + E_{jx}^o - E_I^o) < O$ |
| $\overline{E_f^o}(e) < O$ | | | | $(d)_o = V_\zeta - s\ell j(\overline{E_{tx}} + E_{jx}^o - E_I^o) < O$ |

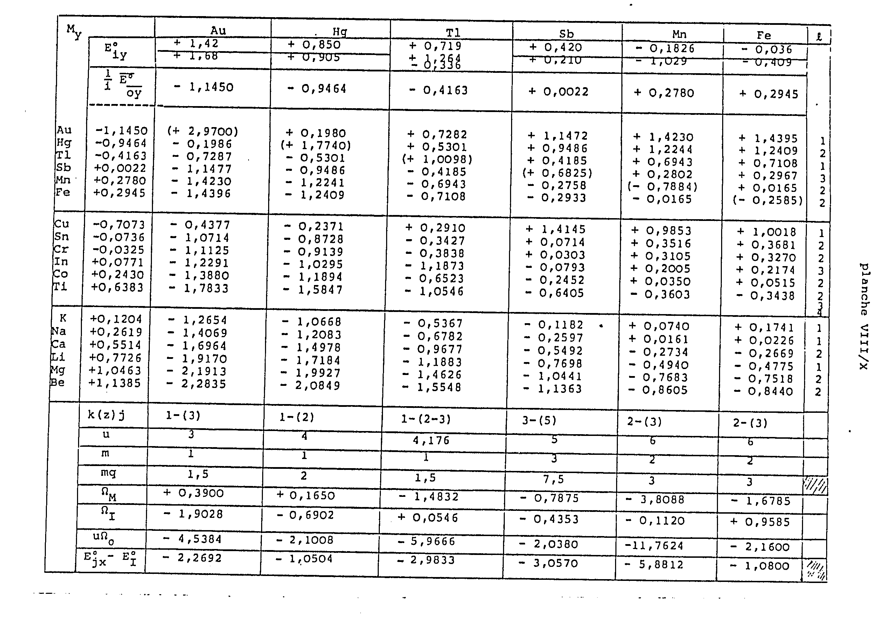

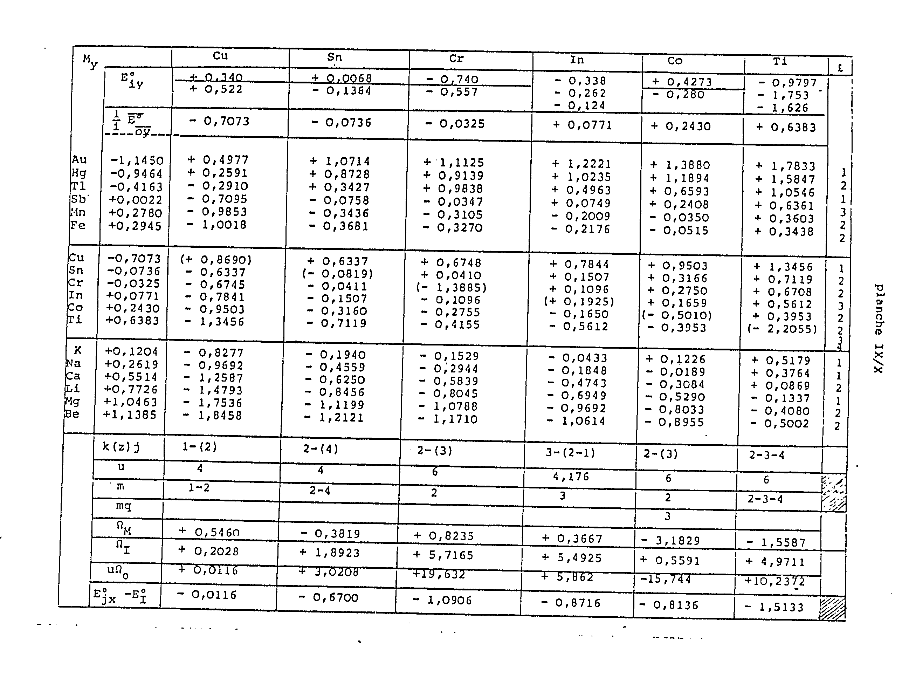

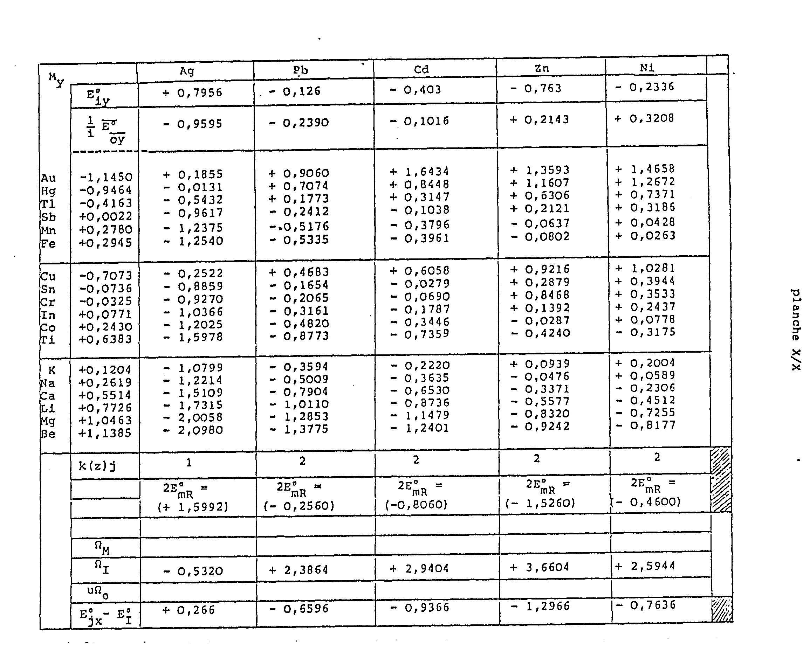

Les planches n° 8 à 10 mentionnent les différentes valeurs de potentiel d'ionisation d'iodure en adoptant la disposition suivante :

| $M_y$ | | $P_\omega^-$ | $P_\omega^+$ | $\ell$ | $P_\alpha^-$ | $P_\alpha^+$ | $\ell$ | $X^-$ | $X^+$ | $\ell$ |
|---|---|---|---|---|---|---|---|---|---|---|
| | $E_{iy}^o$ | | | | | | | | | |
| | $\frac{1}{y}\overline{E_{oy}^o}$ | | | | | | | | | |
| $P_\omega^-$ $P_\omega^+$ | | $(\overline{E}_{p\omega})_\omega$ | | | $(\overline{E}_{p\alpha})_\omega$ | | | $(\overline{E}_{px})_\omega$ | | |
| $P_\alpha^-$ $P_\alpha^+$ | | $(\overline{E}_{p\omega})_\alpha$ | | | $(\overline{E}_{p\alpha})_\alpha$ | | | $(\overline{E_{px}})_\alpha$ | | |
| T | | $(\overline{E_{tp}})_\omega$ | | | $(\overline{E_{tp}})_\alpha$ | | | $\overline{E_{tx}}$ | | |

planche 8    planche 9    planche 10

Les potentiels d'électrodes à l'écriture et à l'effacement ou niveaux d'écriture et d'effacement, sont notés respectivement.

$(w)_E$    potentiel d'écriture de l'élément $M_x$

$(d)_E$    potentiel d'effacement de l'élément $M_x$

$(w)_R$    potentiel d'écriture de l'électrode de référence

$(d)_R$    potentiel d'effacement de l'électrode de référence.

En l'absence d'électrode de référence, les tensions internes d'écriture et d'effacement, respectivement $V_w$ et $V_d$ s'expriment alors :

$$V_w = (d)_E - (w)_E = -V_d$$

En présence d'une électrode de référence, on a les relations suivantes :

$$V_w = (d)_R - (w)_E$$

$$V_d = (w)_R - (d)_E$$

$$V_w + V_d = \angle (w)_R + (d)_R \, 7 - \angle (w)_E + (d)_E \, 7 = (\overline{0}) - (\overline{0}) = 0$$

Dans le cas d'un électrolyte de type $(\alpha)$, $(\beta)$ ou $(\gamma)$ on peut prendre comme électrode de référence une électrode constituée en un métal $M_x$, ou un dépôt préalable de $M_x$ sur une électrode quelconque. Dans pareil cas le potentiel d'électrode correspond au potentiel flottant ou potentiel mémoire.

Les tensions internes d'écriture et d'effacement sont alors notées respectivement :

$V_{w/f}$ et $V_{d/f}$ par rapport à une électrode flottante

$V_{w/Pt}$ et $V_{d/Pt}$ par rapport à une électrode de platine.

$C_x$ , concentration de l'iodure de l'élément $M_x$

$\overline{C}_x$ , concentration limite de l'iodure de l'élément $M_x$

14

Les autres notations sont conformes aux notations usuellement adoptées en électrochimie.

## Tensions internes d'écriture et d'effacement

Si l'on part de solutions monomoléculaires en iodure de $M_t$ et de $M_p$, on obtient les relations :

$$V_{w/f} = E_f^O + \frac{\tau_F}{\tau_m} \cdot \frac{RT}{F} \log C_x$$

$$V_{d/f} = E_d^O - E_f^O - \frac{\tau_F}{\tau_m} \cdot \frac{RT}{F} \log C_x$$

La concentration limite $\overline{C}_x$ correspond à l'égalisation des tensions d'écriture et d'effacement $(V_{w/f} = V_{d/f})$

$$\text{Log } \overline{C}_x = - \frac{F}{RT} \frac{\tau_m}{\tau_F} (E_w^O - E_d^O)$$

comme $$E_f^O = E_{M_x}^O + r \frac{RT}{F} \log C_x$$

On obtient ainsi :

$$V_{w/Pt} = V_{w/f} - (E_{Pt}^O - E_{M_x}^O) - (\frac{\tau_F}{\tau_m} - r) \frac{RT}{F} \log C_x$$

$$V_{d/Pt} = V_{d/f} - (E_{Pt}^O - E_{M_x}^O) + (\frac{\tau_F}{\tau_m} + r) \frac{RT}{F} \log C_x$$

Pour pouvoir déposer ou effacer un élément $M_x$, dans une cellule d'affichage, il faut appliquer entre deux électrodes une f.e.m. au moins égale mais de signe opposé aux tensions internes d'écriture et d'effacement précédemment défini. Il existe une correspondance galvanique entre le courant traversant alors la cellule et l'épaisseur du dépôt, qui s'exprime comme suit :

$$q = it = \mathcal{T}_F \cdot \frac{j.e.d.}{A_x}$$

avec :

i : la densité de courant à l'affichage en $mA/cm^2$

s : la surface à recouvrir en $cm^2$

e : l'épaisseur d'un dépôt en Å supposé identique au métal massif

d : la densité de $M_x$ à l'état massif

t : le temps de dépôt

$A_x$ : la masse atomique de $M_x$, et j sa valence,

Dans le cas d'un équilibre de type (ω) il faut éventuellement vaincre la surtension

$$S = (w)_R - (d)_R$$

Les électrolytes multiconstituants selon l'invention de type (α) (β) et (γ) présentent un potentiel d'oxydoréduction ou potentiel d'électrolyte, défini , étant donné que la valeur moyenne des charges électriques dans chacun des membres de l'équilibre global d'oxydoréduction de l'électrolyte est nulle. La densité de charge volumique du milieu électrolyte étant nulle, ce milieu est équipotentiel et son potentiel peut être pris comme référence quelle que soit la nature des électrodes et leur disposition relative. Si les électrodes sont de même nature, les phénomènes d'écriture et d'effacement ne dépendent que de la différence de potentiel qui leur est appliquée, et ce quelle que soit leur disposition relative. Elles peuvent donc en particulier être agencées de manière coplanaire tel qu'énoncé plus en détail dans une autre demande de brevet déposée ce même jour au nom de la demanderesse. En outre, le rendement faradaïque peut être supérieur ou égal à 1, d'où il résulte une diminution appréciable de la consommation en courant. De surcroît, les électrolytes α,β,et γ selon l'invention font intervenir des équilibres tampons à complexation de l'iode qui n'intervient donc plus dans le mécanisme d'affichage.

Les électrolytes de type (α), (β) et (γ) selon l'invention permettent en outre d'obtenir un système d'affichage polychrome correspondant au dépôt d'éléments de couleurs bien différenciées, séparément ou simultanément.

A titre d'illustration, on mentionnera quelques exemples d'éléments $M_x$, ainsi que leur couleur d'affichage.

Au        : jaune
Ag,Tl,Pb : noir
Cd        : gris clair
Zn

Par ailleurs, en faisant jouer à chacun des éléments métalliques en solution le rôle de l'élément déposable $(M_x)$, il est possible de connaître pour une combinaison donnée du nombre des iodures distincts présents dans l'électrolyte, une échelle de différences de potentiel d'écriture relatives à chacun des éléments, et de pouvoir ainsi déposer et effacer de manière sélective chacun des éléments. On peut également en déposer deux ou plusieurs simultanément, puisque le rendement de dépôt par électron peut être supérieur à 1, on peut ainsi obtenir des couleurs nuancées. En jouant sur la couleur du fond coloré dans le cas d'un éclairage ambiant en vision directe, la qualité de la lumière, filtrée ou polarisée, dans le cas d'une face arrière transparente, on peut réaliser un affichage polychrome bien contrasté.

Lorsque les différences de potentiel d'écriture ne permettent pas d'assurer un dépôt sélectif, on peut agir sur la concentration initiale et limite pour effacer une couleur avant d'en faire apparaître une autre, avoir un fondu ou un dégradé dans l'affichage.

Pour réaliser un tel affichage polychrome prédéterminé, on peut, grâce aux valeurs fournies aux planches 8 à 10, déterminer, les équilibres fonctionnels pour un élément $M_p$ donné, sachant que l'on peut choisir l'élément $M_t$ dans le groupe T, et les éléments $M_x$ dans les groupes X et $P_\omega$.

En revanche, les éléments $M_p$ doivent nécessairement donner un équilibre tampon de même facteur pondéral u, en raison de l'interaction entre l'équilibre fonctionnel et de l'équilibre tampon.

En ce qui concerne l'électrolyte $\omega$, l'interaction va se produire entre l'équilibre tampon et l'électrode de référence.

Les mécanismes d'affichage polychrome seront réglés par la position des niveaux d'écriture et d'effacement, par rapport au niveau correspondant de l'électrode de référence d'une part, et par rapport au potentiel indifférent $V_\zeta$ d'autre part. Contrairement aux électrolytes de type ($\alpha$), ($\beta$) et ($\gamma$), on peut ici mélanger plusieurs éléments $M_p$ pour ajuster ces différents potentiels.

Les concentrations limites étant également liées à l'existence de ce potentiel $V_\zeta$ , ce dernier devient donc le paramètre essentiel de l'affichage.

Dans le cas d'un tel électrolyte de type $(\omega)$, on pourra choisir les éléments $M_t$ dans le groupe T, les éléments $M_p$ dans le groupe $P_\omega$ et les éléments $M_x$ dans le groupe X et $P_\alpha$. Dans ce cas particulier, on disposera d'une couleur intéressante supplémentaire, à savoir le rouge lorsque $M_x$ est le cuivre. L'ensemble des équilibres de type $(\omega)$ est caractérisé par un facteur pondéral entre équilibre fonctionnel et équilibre tampon moyen égal à l'unité.

Dans le tableau II ci-après on indiquera des exemples d'éléments susceptibles d'entrer dans la composition d'électrolytes de type $(\omega)$ selon l'invention, ainsi que d'électrode de référence susceptible de prendre un potentiel indifférent.

TABLEAU II

|      | $M_p$ | $M_t$ | $M_x$ | $E_R$ |
|------|-------|-------|-------|-------|
| Ca   |       | x     |       |       |
| K    |       | x     |       |       |
| U    |       | x     |       |       |
| Zn   |       | x     | x     |       |
| Cd   |       | x     | x     |       |
| Tl   | x     | x     | x     |       |
| Pb   |       | x     | x     |       |
| Cu   | x     | x     | x     |       |
| Ag   |       | x     | x     | x     |
| Hg   | x     | x     | x     | x     |
| Au   | x     | x     | x     | x     |
| Pt   |       |       |       | x     |
| Be   |       | x     |       |       |
| Mg   |       | x     |       |       |
| Li   |       | x     |       |       |
| Na   |       | x     |       |       |
| Sn   |       | x     | x     |       |
| Fe   | x     | x     | x     |       |
| Ni   |       | x     | x     |       |
| Co   | x     | x     | x     |       |
| Ti   |       | x     | x     |       |
| Cr   |       | x     | x     |       |
| Mn   | x     | x     | x     |       |
| Sb   |       | x     | x     |       |
| In   |       | x     | x     |       |

Le potentiel indifférent $V_\zeta$ est proportionnel au potentiel tampon. Aussi est-il possible de le déterminer dans un électrolyte à n constituants $M_O$, $M_1$, $M_2$,..., $M_{n-1}$ comprenant 1 seul constituant purement $M_t$, à savoir $M_O$, et r éléments pouvant faire office de $M_p$ : $M_1 ... M_r (r \geqslant 1)$ tous les éléments $M_m$ $(1 \leqslant m \leqslant n-1)$ pouvant être considérés comme $M_x$.

1- <u>Détermination des potentiels tampons $\Omega_o$</u>

Considérons l'ensemble des équilibres fonctionnels d'écriture $\omega_i$ élémentaires relatifs à un élément $M_p$. L'équilibre global rapporté à un facteur pondéral $\omega = 1$ est noté :

$$w\begin{pmatrix} M_t, & M_p, & M_x \\ \downarrow & \downarrow & \downarrow \\ \Rightarrow M_p, & M_p, & M_p \end{pmatrix} = w_p^O = w_{pp}^O + \Omega_{M_p}$$

$w_{pp}^O \Rightarrow$ à la résultante des réactions fonctionnelles d'écriture élémentaires

$\Omega_{M_p} \Rightarrow$ à la réaction entre espèces oxydées de l'élément $M_p$ dans l'équilibre tampon

$w_p^O$ niveau d'écriture de l'élément $M_p$

Le potentiel d'équilibre tampon, compte tenu des différents facteurs $\delta$ et $\omega$ associés aux équilibres élémentaires est égal à :

$$\Omega_{op} = \Omega_{M_p} + \Omega_{I_p}$$

$$\Omega_{I_p} = 2E_I - 2\left(\frac{\overset{i}{\Sigma} \delta_i E_{IO}}{\Sigma_{\omega_i}}\right)$$

où

$$E_{IO} = + 0,0024\ V \Rightarrow I^- + I_2 \longrightarrow I_3^-$$
$$E_I = + 0,5336\ V \Rightarrow 2e^- + I_3^- \longrightarrow 3I^-$$

Pour un électrolyte à n constituants, le potentiel $\Omega_0$ est égal à :

$$\Omega_0 = \frac{1}{r} \sum_{p=I}^{p=r} \Omega_{op}$$

Le tableau III ci-après donne les tensions internes standards d'écriture relatives à un électrolyte ($\omega$) comprenant l'or en tant qu'élément $M_p$ et l'argent en tant qu'élément $M_x$, pour différents éléments possibles $M_t$ (K,Na,Li,Be,Mg et Ca) et pour diverses électrodes de référence possibles (Ag,$I_2$,Pt et Au).

## TABLEAU III

| $\Omega_o = -1,5128$ | $M_x$ | $M_t$ | K | Na | Li | Ca | Mg | I |
|---|---|---|---|---|---|---|---|---|
| n = 3   $M_p$ | | Ag | $W_E^o$ | $-0,0584$ | $-0,2003$ | $-0,7098$ | $-0,9792$ | $-1,9686$ | $-2,!$ |
| $M_R$   A u | | | $d_E^o$ | $-2,2108$ | $-2,0689$ | $-0,9843$ | $-3,5592$ | $-2,5698$ | $-2,!$ |
| Ag | Au | Ag | $d_R^o$ $V$ $W_R^o$ | | $-0,5320$ $-1,1346$ $-1,7332$ | | | $-0,5320$ $-2,2692$ $-4,0064$ | |
| | | | S | | $-1,2012$ | | | $+3,4744$ | |
| | | | V | $-0,4736$ | $-0,3317$ | $-0,1778$ | $+0,4472$ | $+1,4366$ | $+1,6$ |
| Pt | Au | Ag | $d_R^o$ $V$ $W_R^o$ | | $-1,3328$ $-1,1346$ $-0,9364$ | | | $-1,3328$ $-2,2692$ $-3,2056$ | |
| | | | S | | $-0,3964$ | | | $+1,8728$ | |
| | | | V | $-1,2744$ | $-1,1324$ | $-0,6230$ | $-0,3536$ | $+0,6358$ | $+0,8$ |
| Au | Au | Ag | $(d_R^o)$ $V$ | | $(-1,9028)$ $-1,1346$ | | | $(-1,9028)$ $-2,2692$ | |
| | | | S | | O | | | O | |
| | | | V | $-1,0762$ | $-0,9343$ | $-0,4248$ | $-2,1554$ | $-1,1660$ | $-0,9$ |
| $I_2$ | Au | Ag | $V$ $(W_R^o)$ | | $-1,1346$ $(-0,0072)$ | | | $-2,2692$ $(-0,0072)$ | |
| | | | S | | O | | | O | |
| | | | V | $-1,0762$ | $-0,9343$ | $-0,4248$ | $-2,1554$ | $-1,1660$ | $-0,9$ |

Les potentiels d'écriture et d'effacement de l'élément $M_x$ sont fixés par les potentiels standards et la concentration de l'iodure de l'élément $M_x$ dans l'électrolyte ($\omega$) considéré.

Les potentiels d'écriture et d'effacement de l'électrode de référence vont eux aussi se calculer à partir des potentiels standards de l'électrode dans l'électrolyte considéré, mais aussi de la charge développée dans les opérations d'écriture et d'effacement. Cette charge va se traduire en termes de variations de concentration d'espèces oxydées ou réduites si ces espèces pré-existent dans l'électrolyte, ou bien en termes de variations de potentiel en correspondance électrochimique si l'électrode de référence ne contient pas d'élément existant dans l'électrolyte ou solubilisé par lui.

On trouve les électrodes en argent, iode et or dans le premier cas, l'électrode de platine dans le second.

La mémoire de la cellule est définie par l'aptitude d'un dépôt à rester écrit dans un afficheur à électrolyte liquide. Cette mémoire peut être statique et se trouve alors mesurée en temps écoulé entre le moment où la tension d'écriture cesse de s'exercer et le moment où le dépôt accuse une perte de contraste appréciable, ou dynamique. Dans ce cas, elle s'exprime en durée d'impulsion de courant pendant laquelle l'électrode s'écrit, passe par un contraste maximum, puis s'efface totalement. La caractéristique de la mémoire dynamique est propre à l'électrode de platine et est distincte de la mémoire statique. Un dépôt peut s'effacer en mémoire dynamique en une fraction de seconde, et avoir une mémoire statique permanente.

Celle-ci ne dépend en effet que des niveaux de potentiels atteints en fin d'écriture. Un dépôt d'éléments $M_x$ est théoriquement en fin d'écriture au potentiel correspondant au niveau d'écriture dans l'électrolyte $(w)_E$ mais isolé, il tend à prendre le potentiel d'écriture qu'aurait une électrode de référence constituée du même élément dans l'électrolyte à l'équilibre $(w)_{Rx}$, mais si son potentiel, en évoluant de $(w)_E$ à $(w)_{Rx}$, passe par la valeur du niveau de potentiel $(d)_R$ correspondant à l'électrode de référence dans l'électrolyte considéré, le dépôt tend à s'effacer. La mémoire va ainsi dépendre de la capacité de l'interface électrode/électrolyte et des différences de niveau entre $(w)_E$ d'une part, $(d)_R$ et $(w)_{Rx}$ d'autre part. Pour que la mémoire soit permanente ou infinie, il suffit donc que l'on observe la relation suivante entre les potentiels standards $(d)_R^O > (w)_E^O$ .

Ainsi, pour l'électrolyte $(\omega)$ considéré (or, argent, $M_t$) et une électrode de référence en argent, la mémoire est permanente lorsque $M_t$ est choisi parmi Ca, Li, Be et Mg, elle est non permanente avec K et Na, mais meilleure pour Na que pour K.

Dans ces deux derniers cas, on observe une influence des électrodes sur le phénomène de mémoire avec une électrode de référence en argent, la mémoire va varier avec $(d)_R$ , quand on crée au voisinage du dépôt des déséquilibres locaux de l'électrolyte (diminution de la mémoire d'un afficheur en fonctionnement).

La mise en court-circuit du dépôt avec la contre-électrode de la cellule permet d'éviter l'effacement à condition que l'impédance interne de l'électrode sur laquelle se trouve le dépôt soit suffisante pour que l'écoulement des charges à travers la cellule élève le potentiel de la contre-électrode plus vite qu'il n'abaisse celui du dépôt, de telle sorte que la contre-électrode atteigne son niveau d'effacement. Ceci correspondrait donc à maintenir une tension d'écriture.

Avec une électrode de référence en or, la mémoire va devenir permanente. En effet, l'électrode en or va modifier les concentrations des espèces de l'équilibre tampon, de telle sorte que son potentiel devienne égal au potentiel indifférent $V_\zeta$.

Le cas du platine est particulier. En mémoire statique, son action est double. Comme il n'existe pratiquement pas d'ions $Pt^{++}$ dans l'électrolyte, il va agir sur l'électrolyte de manière à prendre un potentiel indifférent. Il en résulte une égalité des potentiels entre les réactions des espèces de même signe de l'équilibre tampon. Ceci va se traduire par une évolution du rapport des concentrations $Au^{3+}/Au^{+}$ et $(I^{-})^{3}/I_{3}^{-}$. Comme la concentration en $(I^{-})$ est fixée, la variation de concentration en $I_{3}^{-}$ va se répercuter sur l'équilibre de l'iode en solution $I^{-} + I_{2} \longrightarrow I_{3}^{-}$ et l'iode va précipiter ou plutôt passer en solution colloïdale. En ce qui concerne un dépôt de $M_{x}$ préalablement déposé, on se trouve ramené au cas précédent. La mémoire statique est généralement permanente.

On notera que la difficulté de passage en solution du platine est à l'origine du phénomène de mémoire dynamique lorsqu'on applique une tension d'écriture.

La charge communiquée à l'électrolyte va provoquer simultanément le dépôt de l'élément $M_x$ et l'élévation du potentiel de l'électrode de platine, de l'équivalent faradaïque de la charge injectée, traduite en termes de potentiel. De ce fait, le potentiel de dépôt va atteindre le niveau de potentiel d'effacement de l'élément $M_x$ dans l'électrolyte $(d)_E$, et va s'effacer.

Pour allonger la mémoire dynamique à charge égale, il faut diminuer la concentration en iodure de l'élément $M_x$, ou augmenter le volume de la cellule.

De façon générale, pour qu'une électrode de référence soit au repos au potentiel indifférent, il est nécessaire que :

$$d_R^{\overset{\circ}{}} < w_R^{\circ}$$

$$- w_{RR}^{\circ} + \frac{1}{r} \sum_{p=1}^{p=r} \Omega_{I_p} < w_{RR}^{\circ} + \overline{\Omega}_0 - \frac{1}{r} \sum_{p=I}^{p=r} \Omega_{I_p}$$

$$d_{RR}^{\circ} < V_\zeta$$

L'iode est toujours au potentiel indifférent. L'excès d'iode passe en solution colloïdale et n'intervient pas dans l'équilibre tampon.

### Cas des éléments de l'électrode de référence susceptibles d'entrer dans la composition de l'électrolyte

Le potentiel indifférent minimum est celui du Cobalt. Seul l'or a un potentiel d'effacement inférieur.

Les électrodes contenant de l'argent ou du mercure peuvent se mettre à un potentiel $V_\zeta$ supérieur respectivement à -0,5320 V et à -0,7068 V. Les autres électrodes ont un potentiel d'effacement positif et ne peuvent se mettre au potentiel indifférent que dans les électrolytes contenant au moins un des éléments suivants : cuivre, chrome, étain, titane, indium. C'est une condition nécessaire mais non suffisante.

En ce qui concerne les électrodes ne comportant pas d'éléments disponibles dans l'électrolyte, plusieurs éventualités se présentent :

L'électrode ne comporte pas d'iodure connu (platine par exemple)

Lorsqu'une quantité d'électricité q (coulomb) est injectée dans une cellule électrochimique de volume v (litre), disposant d'une électrode de référence en platine jouant le rôle de contre-électrode, le potentiel de celle-ci s'élève d'une quantité :

$$\Delta E_R = - \frac{RT}{2F} \; Log \; [Pt^{2+}]$$

Il existe une correspondance faradaïque entre la molalité $[Pt^{2+}]$ (mole/litre), du platine passant en solution, et la charge injectée q

$$[Pt^{2+}] = 0,19734 \; \frac{q}{v}$$

donc $\Delta E_R = 0,02956 \; \frac{T}{298} \; [0,70474 - log \; (\frac{q}{v})]$

Soit $(V_\zeta)_E$ le potentiel indifférent de l'électrolyte. La charge q donne lieu à des réactions d'écriture dans l'électrolyte ($\omega$) tant que

$$d^o_{Pt} + \Delta E_R < (V_\zeta)_E$$

Dès que le potentiel du platine atteint le potentiel indifférent, c'est-à-dire lorsque la quantité d'électricité atteint la valeur $q_O$ tel que

$$\log(q_O) = \frac{10^4}{T} (1,3328 + (V_\zeta)_E) - 0,70474 + \log(v)$$

le processus s'inverse, le platine·se redépose et l'excès de quantité d'électricité donne lieu à des réactions d'effacement (mémoire dynamique). En revanche si l'électrode de platine ne sert plus de contre-électrode, son potentiel $(d_{Pt}^O)$ sert de référence à l'électrolyte $(\omega)$ et nous nous retrouvons dans le cas des électrolytes $(\alpha,\beta,\gamma)$ sans pour cela faire appel à de l'iode. La mémoire statique est généralement permanente.

Electrode d'or

L'électrode d'or, aussi bien en contre-électrode qu'en électrode de référence, est au potentiel indifférent de l'électrolyte à n constituants, si l'or est un de ceux-ci, sinon au potentiel indifférent d'un électrolyte à (n+1) constituants comprenant l'électrolyte initial plus l'or. Les concentrations limites des espèces oxydées de l'or sont tellement faibles qu'il y a dépôt sur l'électrode de l'or en solution dans le premier cas, dissolution inappréciable de l'électrode dans le second. Par définition le passage éventuel par le potentiel indifférent du potentiel du dépôt, de $W_{EX}$ à $W_{RX}$ n'entraîne pas de réaction d'effacement. La mémoire statique est donc permanente.

Cas d'électrodes comportant des éléments solubilisables par l'électrolyte mais sous une forme non soluble (tels que des oxydes)

Le problème est le même que pour le platine (surtension à l'écriture des couches d'oxydes d'étain-antimoine) mais est plus difficile à traiter en ce qui concerne la détermination de la concentration des éléments solubilisés et par conséquent des potentiels d'électrodes. On obtient ces concentrations en égalant les potentiels chimiques de l'élément considéré dans l'électrode et dans l'électrolyte.

Si les électrolytes ne contiennent pas d'éléments $M_p$, ils peuvent cependant être considérés comme des électrolytes $(\omega)$ en regard d'électrodes contenant des éléments $M_p$ solubilisables. Ces éléments sont caractérisés par un potentiel indifférent négatif, ce sont Hg, Au, Fe, Co, Sb.

Si les électrodes contiennent des éléments $M_p$ non solubilisables, elles se mettent au potentiel indifférent de l'électrolyte $(\omega)$.

La surtension qui se manifeste à l'écriture entre une électrode à q éléments $M_{ps}$ solubilisables et une contre-électrode métallique R plongée dans un électrolyte $(\omega)$ est

$$S = \frac{r(V_\zeta)_E + \Sigma(V_\zeta)_{ps}}{r + q} - d_R^o$$

Le potentiel tampon correspondant

$$\overline{\Omega}_o = \frac{r\,\Omega_o + z\,\Sigma(V_\zeta)_{ps}}{r + q}$$

Les symboles $M_{ps}$ représentent les éléments $M_p$ solubilisables de l'électrode n'existant pas dans l'électrolyte.

Une électrode à éléments $M_p$ solubilisables peut avoir son intérêt vis-à-vis d'électrolytes dépourvus d'éléments $M_p$. Cependant la surtension peut amener une dissolution de l'élément $M_p$ de l'électrode surtout à basse température, car la différence entre la surtension et le potentiel d'effacement standard correspondant à un élément $M_p$ solubilisable de l'électrode est constant et égal à :

$$\frac{RT}{zF} \quad \log \; (M_p^{z+})$$

Si T diminue, $\log(M_p^{z+})$ augmente au détriment de la surface de l'électrode qui se dégrade de manière irréversible.

On rappellera que tous les électrolytes multiconstituants objet de la présente invention se caractérisent par l'existence d'un potentiel d'électrolyte bien défini. Dans le cas des électrolytes de types ($\alpha$), ($\beta$) et ($\gamma$) ce potentiel est défini par l'équilibre de complexation de l'iode, alors que dans les électrolytes de type ($\omega$) le potentiel se trouve fixé par l'électrode de référence présentant une nature électrochimique définie.

REVENDICATIONS

1) Electrolyte liquide multiconstituant à potentiel défini pour cellule d'affichage électrolytique, du type à base d'au moins un iodure métallique dissous dans un solvant organique anhydre, caractérisé en ce qu'il comprend les trois constituants fonctionnels suivants :

a) un premier élément métallique $M_p$ qui donne au moins deux iodures correspondant à des valences différentes, et qui est destiné à assurer l'équilibre entre les formes réduites de l'iode $I^-$ et $I_3^-$ ;

b) un iodure d'un second élément métallique $M_t$, à l'état pratiquement totalement dissocié, destiné à fixer la concentration de l'électrolyte en espèce anionique $I^-$ ;

c) un iodure d'un troisième élément métallique $M_x$ constituant le véhicule de l'affichage.

2) Electrolyte selon la revendication 1, caractérisé en ce que l'élément métallique $M_p$ est choisi parmi Tl, Cu, Hg, Au, Sn, Fe, Co, Ti, Cr, Mn, Sb et In.

3) Electrolyte selon l'une des revendications 1 et 2, caractérisé en ce que l'élément métallique $M_t$ est choisi parmi les éléments ayant un potentiel d'ionisation d'iodure positif, en particulier les métaux alcalins et alcalino-terreux.

4) Electrolyte selon l'une des revendications 1 à 3, caractérisé en ce que l'élément métallique $M_x$ est choisi parmi Zn, Cd, Tl, Pb, Cu, Ag, Hg, Au, Sn, Fe, Ni, Co, Ti, Cr, Mn, Sb et In.

5) Electrolyte selon l'une des revendications 1 à 4, caractérisé par un équilibre tampon entre les espèces réduites de l'iode $I^-$ et $I_3^-$ d'une part, l'iode et les espèces oxydées de l'élément $M_p$ d'autre part, de manière à assurer la neutralité électrique dudit électrolyte et à fixer son potentiel qui devient indépendant de la nature des électrodes.

6) Electrolyte selon l'une des revendications 1 à 5, caractérisé en ce qu'il comprend trois constituants distincts, le constituant fonctionnel $M_p$ étant choisi parmi : Cr, In, Ti, Sn et Cu, le constituant fonctionnel $M_x$ étant choisi parmi Zn, Cd, Tl, Pb, Mn, Sb, Fe, Ni,Co, Ag, Hg et Au, alors que le constituant fonctionnel $M_t$ est choisi parmi les éléments à potentiel d'ionisation d'iodure positif.

7) Electrolyte selon l'une des revendications 1 à 5, caractérisé en ce qu'il comprend trois constituants distincts, le constituant fonctionnel $M_p$ étant choisi parmi Mn, Au, Tl, Hg, Sb, Co, Fe, le constituant fonctionnel $M_x$ étant choisi parmi Zn, Cd, Ni, Co, Pb, Sn, In et Ti, alors que le constituant fonctionnel $M_t$ est choisi parmi les éléments à potentiel d'ionisation d'iodure positif.

8) Electrolyte selon la revendication 7, caractérisé en ce que l'équilibre tampon de la revendication 5 est assuré par la présence d'une électrode de référence.

9) Electrolyte selon l'une des revendications 1 à 7, caractérisé en ce que le rapport pondéral ω entre l'équilibre tampon et l'équilibre fonctionnel est égal à l'unité.

10) Cellule d'affichage électrolytique caractérisée en ce qu'elle contient, en tant que milieu électrolytique d'affichage, un électrolyte liquide multiconstituant à potentiel défini, selon l'une des revendications 1 à 9.

11) Cellule d'affichage selon la revendication 10, caractérisée en ce que l'électrolyte présente un potentiel indifférent.

12) Cellule d'affichage selon la revendication 11, caractérisée en ce qu'elle comporte une électrode de référence réalisée en un métal choisi parmi Ag, Hg, Au et Pt.

13) Cellule d'affichage selon l'une des revendications 10 à 12, caractérisée en ce que le potentiel standard d'effacement de l'électrode de référence $(d)_R^O$ est supérieur ou égal au potentiel standard d'écriture de l'élément $M_x$ dans l'électrolyte considéré, en vue de conférer à la cellule une mémoire permanente.

14) Cellule d'affichage selon l'une des revendications 10 à 13, caractérisée en ce que l'électrolyte multiconstituant comprend plusieurs éléments $M_x$ différents de couleurs d'affichage différentes en vue d'assurer un affichage polychrome.

Pl. I/X

1/10

$$\boxed{\text{EQUILIBRES } (\alpha)}$$

$$\begin{cases} (3+k-z)\omega M_p^{z+} + 3\omega I^- \longrightarrow \omega I_3^- + (3+k-z)\omega M_p^+ \quad \text{(TAMPON)} \\ \\ \delta (I^- + I_2 \longrightarrow I_3^-) \\ \\ j(sM_t^{\ell+} + pM_p^{k+}) + (s\ell + kp)M_x I_j \longrightarrow j(sM_t I_\ell + pM_p I_k) + (s\ell + kp)M_x^{j+} \quad \text{(FONCTIONNEL)} \end{cases}$$

$$\frac{u\omega}{j} = \frac{3\omega+\delta}{j} = rj = kp + s\ell$$

$$\boxed{\text{REACTIONS } (\alpha)}$$

$$jqM_p^O + \left[(3+k-z)\omega - jq\right] M_p^{z+} + 3\omega I^- \longrightarrow \omega I_3^- + (3+k-z)\omega M_p^+ + zjqe^-$$

$$j(s\ell + kq)e^- + j(sM_t^{\ell+} + pM_p^{k+}) + (s\ell + kp)M_x I_j \longrightarrow \left[(kqM_x I_j + j(sM_t I_\ell + (p-q)M_p I_k)\right] + s\ell M_x^O + jqM_p^O + k(p-q)M_x^{j+}$$

| RENDEMENT PONDERAL | RELATION CARACTERISTIQUE $kp = rj - s\ell$ | | fonctions |
|---|---|---|---|
| $m = rj - kp$ | COEFFICIENTS FONCTIONNELS | $\begin{cases} q = a & g < o \Rightarrow w \end{cases}$ | écriture |
| $m = s\ell$ | $q = \dfrac{s\ell}{z-k} + \dfrac{q}{j(z-k)} \Rightarrow$ | $q = b \quad g = o \Rightarrow f$ | mémoire |
| | | $q = c \quad g > o \Rightarrow d$ | effacement |
| $\dfrac{m}{r} = j - \dfrac{kp}{r}$ | $(z-k)(a+b+c) = 3s\ell = 3(rj-kp)$ | | |
| $\leqslant 1 \Rightarrow kp \geqslant r(j-1)$ | $c \leqslant (3+k-z)\dfrac{\omega}{j}$ | RENDEMENT FARADAIQUE | |
| $kp \geqslant j(j-1)(z-k)$ | $c \leqslant pk$ | $\left|\dfrac{m}{g}\right| = \dfrac{s\ell}{j(z-k)}$ | |
| | $g = \pm j(z-k)$ | $\dfrac{m}{g} \geqslant 1 \Rightarrow r \geqslant j(z-k)$ | |

EQUILIBRES (β)

$$(3+k-z)\omega M_p^{z+} + 3\omega I^- \longrightarrow \omega I_3^- + (3+k-z)\omega M_p^+ \qquad \text{(TAMPON)}$$

$$u\omega = 3\omega + \delta = s\ell + rj = kp$$

$$\delta(I^- + I_2 \longrightarrow I_3^-)$$

$$pM_p^{k+} + rM_x I_j + sM_t I_\ell \longrightarrow pM_p I_k + sM_t^{\ell+} + rM_x^{j+} \qquad \text{(FONCTIONNEL)}$$

REACTIONS (β)

$$jqM_p^O + [(3+k-z)\omega - jq] M_p^{z+} + 3\omega I^- \longrightarrow \omega I_3^- + (3+k-z)\omega M_p^+ + zjqe^-$$

$$rje^- + pM_p^{k+} + rM_x I_j + sM_t I_\ell \longrightarrow (p-jq)M_p I_k + kqM_x I_j + sM_t^{\ell+} + (r-k-q)M_x^O + jqM_p^O$$

| RENDEMENT PONDERAL | RELATION CARACTERISTIQUE $kp = s\ell + rj$ | fonctions |
|---|---|---|

RENDEMENT PONDERAL

$$m = r - kq$$

$$m = r\left(\frac{z-k}{z}\right) - \frac{kq}{jz}$$

$$\left(\frac{m}{r}\right)_w = \frac{z-k}{z} + \frac{k}{r}$$

$$\leqslant 1 \Rightarrow r \geqslant \frac{z}{z-k} \text{ et } kp \geqslant \frac{zj}{z-k} + s\ell$$

$$\left(\frac{m}{r}\right)_d = \frac{z-k}{z} - \frac{k}{r}$$

RELATION CARACTERISTIQUE $kp = s\ell + rj$

COEFFICIENTS FONCTIONNELS

$$q = \frac{rj + g}{jz} \implies \begin{cases} q = a & g < o \implies w & \text{écriture} \\ q = b & g = o \implies f & \text{mémoire} \\ q = c & g > o \implies d & \text{effacement} \end{cases}$$

$$z(a+b+c) = 3r = \frac{3(kP - s\ell)}{j}$$

$$c \leqslant (3+k-z)\frac{\omega}{j}$$

$$c \leqslant pk$$

$$g = \pm jz$$

RENDEMENT FARADAIQUE

$$\left(\frac{m}{g}\right)_w = \frac{1}{zj}\left[r\left(\frac{z-k}{z}\right) + k\right]$$

$$\geqslant 1 \Rightarrow r \geqslant \frac{z}{z-k}(k + zj)$$

$$\left(\frac{m}{g}\right)_d = \frac{1}{zj}\left[r\left(\frac{z-k}{z}\right) - k\right]$$

$$\boxed{\text{EQUILIBRES } (\gamma)}$$

$$
\begin{cases}
(3+k-z)\omega M_p^{z+} + 3\,\omega I^- & \longrightarrow & \omega I_3^- + (3+k-z)\omega M_p^{k+} & \text{(TAMPON)} \\
\delta(I^- + I_2 & \longrightarrow & I_3^-) & u\omega = 3\omega + \delta = s\ell = rj + kp \\
sM_t^{\ell+} + rM_x I_j + pM_p I_k & \longrightarrow & sM_t I_\ell + rM_x^{j+} + pM_p^{k+} & \text{(FONCTIONNEL)}
\end{cases}
$$

$$\boxed{\text{REACTIONS } (\gamma)}$$

$$jqM_p^0 + \left[(3+k-z)\omega - jq\right]M_p^{z+} + 3\omega I^- \longrightarrow \cdot\ \omega I_3^- + (3+k-z)\omega M_p^+ + zjqe^-$$

$$j(r+kq)e^- + sM_t^{\ell+} + rM_x I_j + pM_p I_k \longrightarrow sM_t I_\ell + rM_x^0 + jqM_p^0 + (p-jq)M_p^{k+}$$

### RENDEMENT PONDERAL

$$m = r$$

$$m = \frac{s\ell - kp}{j}$$

$$\frac{m}{r} = 1$$

### RELATION CARACTERISTIQUE $kp = s\ell - rj$

COEFFICIENTS FONCTIONNELS

$$q = \frac{kp + q}{j(z+k)} \implies
\begin{cases}
q = a & g < o \implies w \\
q = b & g = o \implies f \\
q = c & g > o \implies d
\end{cases}$$

$$j(z+k)(a+b+c) = 3kp = 3(s\ell - rj)$$

$$c \leqslant (3+k-z)\frac{\omega}{j}$$

$$c \leqslant \frac{pk}{j}$$

$$g = j(z+1)$$

fonctions

écriture

mémoire

effacement

### RENDEMENT FARADAIQUE

$$\frac{m}{g} = \frac{r}{j(z+k)}$$

$$\frac{m}{g} \geqslant 1 \implies r \geqslant j(z+k)$$

$$\boxed{\text{EQUILIBRES } (\omega)}$$

(Electrode de référence en $M_R^O$)

$$(3+k-z)\omega M_p^{z+} \quad + \quad 3\omega I^- \qquad \longrightarrow \qquad \omega I_3^- \quad + \quad (3+k-z)\omega M_p^{k+} \qquad (0)$$

$$js M_t^{\ell+} \quad + \quad s\ell M_x I_j \qquad \longrightarrow \qquad js M_t I_\ell \quad + \quad s\ell M_x^{j+} \qquad (1)$$

$$(3+k-z)m\left[M_p^{k+} \quad + \quad (z-k) M_R^{m+} \qquad \longrightarrow \qquad (z-k)M_R^O + \quad m M_p^{z+}\right] \qquad (2)$$

$$2 M_R^O \quad + \quad m\, I_3^- \qquad \longrightarrow \qquad 3m I^- \quad + \quad 2 M_R^{m+} \qquad (3)$$

$$s\ell je^- \quad + \quad js M_t^{\ell+} \quad + \quad s\ell M_x I_j \qquad \longrightarrow \qquad s\ell M_x^O \quad + \quad sj M_t I_\ell \qquad (4)$$

$$q M_R^O \qquad \longrightarrow \qquad q M_R^{m+} \quad + \quad mqe^- \qquad (5)$$

$$js M_t I_\ell \quad + \quad s\ell M_x^O \qquad \longrightarrow \qquad s\ell M_x I \quad + \quad js M_t^{\ell+} \quad + \quad s\ell je^- \qquad (6)$$

$$mqe^- \qquad + \quad q M_R^{m+} \qquad \longrightarrow \qquad q M_R^O \qquad (7)$$

$$3\omega + 6 = s\ell j = mq$$

$$(w)_o = \left[(3+k-z) M_p \quad + \quad \tfrac{1}{\ell} M_t^{\ell+} \quad + \quad \tfrac{1}{j} M_x I_j\right] mq \quad \longrightarrow \quad mq \left[\tfrac{1}{j} M_x^O \quad + \quad \tfrac{1}{\ell} M_t I_\ell \quad + \quad (3+k-z) M_p^{z+}\right] \quad (8)$$

$$(d)_o = \left[\; I_3^- \quad + \quad \tfrac{1}{\ell} M_t I_\ell \quad + \quad \tfrac{1}{j} M_x^O \right] mq \quad \longrightarrow \quad mq \left[\tfrac{1}{j} M_x I_j \quad + \quad \tfrac{1}{\ell} M_t^+ \quad + \quad 3\, I^-\right] \quad (9)$$

$$\boxed{(w)_o \; + \; (d)_o = mq\,\Omega_o}$$

planche V/X

**Tableau supérieur**

| n | $\Omega_n$ | $\delta$ | $3\omega+\delta = \omega i$ | z | 1 + | 1 − | 2 + | 2 − | 3 + | 3 − | 4 + | 4 − | $P_o$ + | $P_o$ − |
|---|---|---|---|---|---|---|---|---|---|---|---|---|---|---|
| 1 | $\Omega_1$ | $\omega$ | $4\omega$ | 2 | Cu | Hg Tl | | | In | | | | + | − |
| 2 | $\Omega_2$ | $\omega$ | $4\omega$ | 2 | | Au Tl | | $Hg_2$ | | | | | + | − |
| 3 | $\Omega_3$ | 0 | $3\omega$ | 3 | | Tl | | | In | | | | + | − |
| 4 | $\Omega_4$ | $3\omega$ | $6\omega$ | 3 | | Tl | Fe Co Mn | | Tl In | | | | + | − |
| 5 | $\Omega_5$ | $\omega$ | $4\omega$ | 4 | | | Cr Tl | Sn | | | Tl | | + | − |
| 6 | $\Omega_6$ | $5\omega$ | $8\omega$ | 4 | | | | | Tl | | Tl | | + | − |
| 7 | $\Omega_7$ | $2\omega$ | $5\omega$ | 5 | | | | | | Sb | | | + | − |

**EQUILIBRES TAMPONS**

par libération d'iode $I_o < I_o^-$ | par complexation d'iode — potentiel tampon

$\Omega_1$:
$$2\omega M_p^{2+} + 3\omega\,I^- \longrightarrow \omega I_3^- + 2\omega M_p^+$$
$$\delta(I_2) + I^- \longrightarrow I_3^- \qquad -\omega\Omega_o$$

$\Omega_2$:
$$2\omega M_p^{2+} + 3\omega\,I^- \longrightarrow \omega I_3^- + \omega((M_p)_2)^{2+}$$
$$\delta(I_2) + I^- \longrightarrow I_3^- \qquad -\omega\Omega_o$$

$\Omega_3$:
$$\omega M_p^{3+} + 3\omega\,I^- \longrightarrow \omega I_3^- + \omega M_p^+$$
$$\delta(I_2) + I^- \longrightarrow I_3^- \qquad -\omega\Omega_o$$

$\Omega_4$:
$$2\omega M_p^{3+} + 3\omega\,I^- \longrightarrow \omega I_3^- + 2\omega M_p^{2+}$$
$$\delta(I_2) + I^- \longrightarrow I_3^- \qquad -\omega\Omega_o$$

$\Omega_5$:
$$\omega M_p^{4+} + 3\omega\,I^- \longrightarrow \omega I_3^- + \omega M_p^{2+}$$
$$\delta(I_2) + I^- \longrightarrow I_3^- \qquad -\omega\Omega_o$$

$\Omega_6$:
$$2\omega M_p^{4+} + 3\omega\,I^- \longrightarrow \omega I_3^- + 2\omega M_p^{3+}$$
$$\delta(I_2) + I^- \longrightarrow I_3^- \qquad -\omega\Omega_o$$

$\Omega_7$:
$$\omega M_p^{5+} + 3\omega\,I^- \longrightarrow \omega I_3^- + \omega M_p^{3+}$$
$$\delta(I_2) + I^- \longrightarrow I_3^- \qquad -\omega\Omega_o$$

planche VI/X

| $\frac{1}{1}\overline{E^O_{oy}}$ | | $M_y$ | | $M_t$ | | $M_p$ | | | | | | $M_x$ | | | | | | | | $X_o$ | $-E^O_{mR}$ | | | $\Omega_o$ | $P_o$ |
|---|---|---|---|---|---|---|---|---|---|---|---|---|---|---|---|---|---|---|---|---|---|---|---|---|---|
| | i | M | $\ell$ | T | k | p | $P_\alpha$ | u | $P_\omega$ | | j | X | $X^+_\alpha$ | j | $X^-_\alpha$ | $X^+_\omega$ | j | $X^-_\omega$ | | | m | n | | |
| | | | | | | | | | | | | | | | | | | | | | | 4 | + 3,272 | Cr |
| | | | | | | | | | | | | | | | | | | | | | | 4 | + 2,624 | Co |
| + 1,1385 | 2 | Be | 2 | Be | | | | | | | | | | | | | | | | | | 4 | + 1,954 | In |
| + 1,1322 | 3 | Ti | | | 3 | Ti | | | | | | | | | Ti | 3 | | Ti | +1,753 | 3 | 3 | | | In |
| + 1,0463 | 2 | Mg | 2 | Mg | | | | | | | | | | | | | | Ti | +1,626 | 3 | 2 | 1 | | In |
| + 0,8490 | 2 | Ti | | | 2 | Ti | | | | | | | | | Ti | 2 | | Mn | +1,029 | 2 | 2 | 4 | + 1,7062 | Ti |
| + 0,7720 | 1 | Li | 1 | Li | | | .Ti | $\overline{6}$ | | | | | | | | | | Ti | +0,9797 | 4 | 5 | | | Ti |
| + 0,5514 | 2 | Ca | 2 | Ca | | | | | | | | | | | | | | Zn | +0,763 | 2 | 6 | | | Ti |
| + 0,4096 | 4 | Ti | | | 4 | Ti | | | | | | | | | Ti | 4 | | | | | 5 | + 0,7552 | Sn |
| + 0,3208 | 2 | Ni | | | | | | | | 2 | Ni | Ni | 2 | | Ni | 2 | | Cr | +0,557 | 2 | 1 | + 0,7488 | Cu |
| + 0,2945 | 2 | Fe | | | 2 | Fe | | 6 | Fe | | | Fe | 2 | | | | | Fe | +0,409 | 2 | | | |
| + 0,2790 | 2 | Mn | | | 2 | Mn | | 6 | Mn | | | Mn | 2 | | | | | Cd | +0,403 | 2 | | | |
| + 0,2619 | 1 | Na | 1 | Na | | | | | | | | | | | | | | In | +0,338 | 3 | | | |
| + 0,2430 | 2 | Co | | | 2 | Co | | 6 | Co | | | Co | 2 | | Co | 2 | | Tl | +0,336 | 1 | | | |
| + 0,2143 | 2 | Zn | | | | | | | | 2 | Zn | Zn | 2 | | Zn | 2 | | Co | +0,280 | 2 | | | |
| + 0,1204 | 1 | K | 1 | K | | | | | | | | | | | | | | Ni | +0,230 | 2 | | | |
| + 0,0771 | 3 | In | | | 3 | In | In | 4,$\overline{17}$ | | | | | | | In | 3 | | Sn | +0,1364 | 2 | | | |
| + 0,0022 | 3 | Sb | | | 3 | Sb | | 5 | Sb | | | | | 3 | Sb | | | Pb | +0,126 | 2 | | | |
| | | | | | | | | | | | | | | | | | | Sn | +0,007 | 4 | | | |
| | | $M^+$ | | T | | $P^+$ | $P^+_\alpha$ | | $P^+_\omega$ | | | $X^+$ | | | | | | | $X^-_o$ | | | | | $P^+_o$ |
| | | o | | o | | o | o | | o | | | o | o | | o | o | o | | o | | | | o | |
| | | $M^-$ | | | | $P^-$ | $P^-_\alpha$ | | $P^-_\omega$ | | | $X^-$ | | | | | | | $X^+_o$ | | | | | $P^-_o$ |
| - 0,0325 | 2 | Cr | | | 2 | Cr | Cr | 6 | | | | | | | Cr | 2 | | Sb | -0,210 | 3 | | | + 2,6240 | Co |
| - 0,0736 | 2 | Sn | | | 2 | Sn | Sn | 4 | | | | | | | Sn | 2 | | Cu | -0,340 | 2 | | | |
| - 0,1016 | 2 | Cd | | | | | | | | 2 | Cd | Cd | 2 | | Cd | 2 | | | | | | 4 | + 0,360 | Fe |
| - 0,2390 | 2 | Pb | | | | | | | | 2 | Pb | Pb | 2 | | Pb | 2 | | Sb | -0,420 | 5 | | 7 | + 0,4076 | Sb |
| - 0,4163 | 1 | Tl | | | 1 | Tl | | 4,$\overline{17}$ | Tl | | | Tl | 1 | | | | | Cu | -0,522 | 1 | | | |
| - 0,7073 | 1 | Cu | | | 1 | Cu | Cu | 4 | | | | | | | | | | Tl | -0,719 | 3 | | | |
| - 0,8925 | 2 | Hg | | | 2 | Hg | | | | | | | | | | | | Ag | -0,7996 | 1 | 1 | | |
| - 0,9464 | 2 | $Hg_2$ | | | 2 | $Hg_2$ | | 4 | Hg | | | | | 2 | Hg | | | Hg | -0,850 | 2 | 2 | + 0,5252 | Hg |
| - 0,9515 | 1 | $Ag^2$ | | | | | | | | 1 | Ag | | | 1 | Ag | 1 | Ag | Hg | -0,905 | 2 | 1 | | Tl |
| - 1,1450 | 1 | Au | | | 1 | Au | | 3 | Au | | | | | 1 | Au | | | Pt | -1,20 | 2 | 3 | | Tl |
| | | | | | | | | | | | | | | | | | | Tl | -1,264 | 2 | 4 | + 1,4286 | Tl |
| | | | | | | | | | | | | | | | | | | Au | -1,42 | 3 | 3 | + 1,5123 | Au |
| | | | | | | | | | | | | | | | | | | Au | -1,68 | 1 | 4 | + 1,9604 | Mn |

planche VII/X

| Electro-lyte (e) | Equilibres fonctionnels $\phi$ (e) | Equilibres tampons $\Omega_n$ | relations caractéristiques | Potentiel d'équilibre de l'électrolyte fonctions "écriture", "mémoire", "effacement" |
|---|---|---|---|---|
| $(\alpha)$ | $j(\frac{rj}{j}\overline{E^\sigma}_{ox} - \frac{pk}{k}\overline{E^\sigma}_{op} - \frac{sl}{l}\overline{E^\sigma}_{op}) =$ <br><br> $pjk(\frac{1}{j}\overline{E^\sigma}_{ox} - \frac{1}{k}\overline{E^\sigma}_{op}) + slj(\frac{1}{j}\overline{E^\sigma}_{ox} - \frac{1}{l}\overline{E^\sigma}_{ot})$ <br><br> $= E^\circ_\phi(\alpha) < 0$ | Equilibre tampon par complexation d'iode <br><br> $\Omega_0 = 2E_I + (3+k-z)\left[kE^\circ_{kp} - zE^\circ_{zp}\right]$ <br><br> $\Omega_0 > 0$ | $u\omega$ <br> $= \frac{\omega}{2}\left[(3+k-z)(k+z)+2\right]$ <br> $= rj^2$ <br> $= j(sl + kp)$ | $E^\circ_\alpha = E^\circ_\phi(\alpha) - \omega\Omega_0 < 0$ <br><br> $E^\circ_f(\alpha) = E^\circ_\alpha + sljE^\circ_{jx} < 0 \Rightarrow f$ <br><br> $w > f > d$ |
| $(\beta)$ | $\frac{rj}{j}\overline{E^\sigma}_{ox} - \frac{pk}{k}\overline{E^\sigma}_{op} + \frac{sl}{l}\overline{E^\sigma}_{ot} =$ <br><br> $rj(\frac{1}{j}\overline{E^\sigma}_{ox} - \frac{1}{k}\overline{E^\sigma}_{op}) + sl(\frac{1}{l}\overline{E^\sigma}_{ot} - \frac{1}{k}\overline{E^\sigma}_{op})$ <br><br> $= E^\circ_\phi(\beta) < 0$ | Equilibre tampon par complexation d'iode <br><br> $\Omega_0 = 2E_I + (3+k-z)\left[kE^\circ_{kp} - zE^\circ_{zp}\right]$ <br><br> $\Omega_0 > 0$ | $u\omega$ <br> $= \frac{\omega}{2}\left[(3+k-z)(k+z)+2\right]$ <br> $= kp$ <br> $= rj + sl$ | $E^\circ_\beta = E^\circ_\phi(\beta) - \omega\Omega_0 < 0$ <br><br> $E^\circ_f(\beta) = E^\circ_\beta + rjE^\circ_{jx} < 0 \Rightarrow f$ <br><br> $w > f > d$ |
| $(\gamma)$ | $\frac{rj}{j}\overline{E^\sigma}_{ox} + \frac{pk}{k}\overline{E^\sigma}_{op} - \frac{sl}{l}\overline{E^\sigma}_{ot} =$ <br><br> $rj(\frac{1}{j}\overline{E^\sigma}_{ox} - \frac{1}{l}\overline{E^\sigma}_{ot}) + pk(\frac{1}{k}\overline{E^\sigma}_{op} - \frac{1}{l}\overline{E^\sigma}_{ot})$ <br><br> $= E^\circ_\phi(\gamma) < 0$ | Equilibre tampon par complexation d'iode <br><br> $\Omega_0 = 2E_I + (3+k-z)\left[kE^\circ_{kp} - zE^\circ_{zp}\right]$ <br><br> $\Omega_0 > 0$ | $u\omega$ <br> $= \frac{\omega}{2}\left[(3+k-z)(k+z)+2\right]$ <br> $= sl$ <br> $= kp + rj$ | $E^\circ_\gamma = E^\circ_\phi(\gamma) - \omega\Omega_0 < 0$ <br><br> $E^\circ_f(\gamma) = E^\circ_\gamma + rj E^\circ_{jx}$ <br><br> $w > f > d$ |
| $(\omega)$ | $\frac{sjl}{j}\overline{E^\sigma}_{ox} - \frac{slj}{l}\overline{E^\sigma}_{ot} =$ <br><br> $= slj(\frac{1}{j}\overline{E^\sigma}_{ox} - \frac{1}{l}\overline{E^\sigma}_{ot}) =$ <br><br> $E^\circ_\phi(\omega) < 0$ <br><br> $\frac{1}{j}\overline{E^\sigma}_{ox} < \frac{1}{l}\overline{E^\sigma}_{ot}$ | Equilibre tampon contrôlé par électrode de référence <br><br> $\Omega_M = 2E^\circ_{mR} + m(3+k-z)\left[kE^\circ_{kp} - zE^\circ_{zp}\right]$ <br><br> $\Omega_I = -2E^\circ_{mR} + 2mE_I$ <br><br> $\Omega_M < 0 \quad \Omega_I < 0$ <br> $\Omega_M + \Omega_I = m\Omega_0 < 0$ | $u\omega$ <br> $= \frac{u}{2}\left[(3+k-z)(k+z)+2\right]$ <br> $= slj$ <br> $= 2mq$ <br> $= g$ <br> $\tau_F = \frac{1}{j}$ | $E^\circ_\omega = E^\circ_\phi(\omega) + m\Omega_0 < 0$ <br> $(w)_0 = E^\circ_\omega + sljE^\circ_{jx} - 2mqE_I < 0$ <br> $(d)_0 = -E^\circ_\omega - sljE^\circ_{jx} + 2mqE_I + m\Omega_0 < 0$ <br> $(w)_0 + (d)_0 = m\Omega_0 = 2V_\zeta < 0$ <br> $(d)_0 - (w)_0 = 2\left[(V_\zeta - E^\circ_\omega) + slj(E^\circ_{jx} - E^\circ_I)\right]$ |

| $M_y$ | | Au | Hg | Tl | Sb | Mn | Fe | ℓ |
|---|---|---|---|---|---|---|---|---|
| | $E^°_{1y}$ | + 1,42 | + 0,850 | + 0,719 | + 0,420 | - 0,1826 | - 0,036 | |
| | | + 1,68 | + 0,905 | ± 1,264 / ± 0,336 | + 0,210 | - 1,029 | - 0,409 | |
| | $\frac{1}{1}\overline{E^°_{oy}}$ | - 1,1450 | - 0,9464 | - 0,4163 | + 0,0022 | + 0,2780 | + 0,2945 | |
| Au | -1,1450 | (+ 2,9700) | + 0,1980 | + 0,7282 | + 1,1472 | + 1,4230 | + 1,4395 | 1 |
| Hg | -0,9464 | - 0,1986 | (+ 1,7740) | + 0,5301 | + 0,9486 | + 1,2244 | + 1,2409 | 2 |
| Tl | -0,4163 | - 0,7287 | - 0,5301 | (+ 1,0098) | + 0,4185 | + 0,6943 | + 0,7108 | 1 |
| Sb | +0,0022 | - 1,1477 | - 0,9486 | - 0,4185 | (+ 0,6825) | + 0,2802 | + 0,2967 | 3 |
| Mn | +0,2780 | - 1,4230 | - 1,2241 | - 0,6943 | - 0,2758 | (- 0,7884) | + 0,0165 | 2 |
| Fe | +0,2945 | - 1,4396 | - 1,2409 | - 0,7108 | - 0,2933 | - 0,0165 | (- 0,2585) | 2 |
| Cu | -0,7073 | - 0,4377 | - 0,2371 | + 0,2910 | + 1,4145 | + 0,9853 | + 1,0018 | 1 |
| Sn | -0,0736 | - 1,0714 | - 0,8728 | - 0,3427 | + 0,0714 | + 0,3516 | + 0,3681 | 2 |
| Cr | -0,0325 | - 1,1125 | - 0,9139 | - 0,3838 | + 0,0303 | + 0,3105 | + 0,3270 | 2 |
| In | +0,0771 | - 1,2291 | - 1,0295 | - 1,1873 | - 0,0793 | + 0,2005 | + 0,3270 | 3 |
| Co | +0,2430 | - 1,3880 | - 1,1894 | - 0,6523 | - 0,2452 | + 0,0350 | + 0,2174 | 2 |
| Ti | +0,6383 | - 1,7833 | - 1,5847 | - 1,0546 | - 0,6405 | - 0,3603 | + 0,0515 | 2 |
| | | | | | | | - 0,3438 | 3 |
| K | +0,1204 | - 1,2654 | - 1,0668 | - 0,5367 | - 0,1182 | + 0,0740 | + 0,1741 | 1 |
| Na | +0,2619 | - 1,4069 | - 1,2083 | - 0,6782 | - 0,2597 | + 0,0161 | + 0,0226 | 1 |
| Ca | +0,5514 | - 1,6964 | - 1,4978 | - 0,9677 | - 0,5492 | - 0,2734 | - 0,2669 | 2 |
| Li | +0,7726 | - 1,9170 | - 1,7184 | - 1,1883 | - 0,7698 | - 0,4940 | - 0,4775 | 1 |
| Mg | +1,0463 | - 2,1913 | - 1,9927 | - 1,4626 | - 1,0441 | - 0,7683 | - 0,7518 | 2 |
| Be | +1,1385 | - 2,2835 | - 2,0849 | - 1,5548 | - 1,1363 | - 0,8605 | - 0,8440 | 2 |
| | k(z)j | 1-(3) | 1-(2) | 1-(2-3) | 3-(5) | 2-(3) | 2-(3) | |
| | u | 3 | 4 | 4,176 | 5 | 6 | 6 | |
| | m | 1 | 1 | 1 | 3 | 2 | 2 | |
| | mq | 1,5 | 2 | 1,5 | 7,5 | 3 | 3 | |
| | $\Omega_M$ | + 0,3900 | + 0,1650 | - 1,4832 | - 0,7875 | - 3,8088 | - 1,6785 | |
| | $\Omega_I$ | - 1,9028 | - 0,6902 | + 0,0546 | - 0,4353 | - 0,1120 | + 0,9585 | |
| | $u\Omega_o$ | - 4,5384 | - 2,1008 | - 5,9666 | - 2,0380 | -11,7624 | - 2,1600 | |
| | $E^°_{jx} - E^°_I$ | - 2,2692 | - 1,0504 | - 2,9833 | - 3,0570 | - 5,8812 | - 1,0800 | |

planche VIII/x

planche IX/X

| $M_y$ | | Cu | Sn | Cr | In | Co | Tl | £ |
|---|---|---|---|---|---|---|---|---|
| | $E^{°}_{iy}$ | + 0,340 / + 0,522 | + 0,0068 / - 0,1364 | - 0,740 / - 0,557 | - 0,338 / - 0,262 / - 0,124 | + 0,4273 / - 0,280 | - 0,9797 / - 1,753 / - 1,626 | |
| | $\dfrac{1}{1}\dfrac{\overline{E^{°}}}{oy}$ | - 0,7073 | - 0,0736 | - 0,0325 | + 0,0771 | + 0,2430 | + 0,6383 | |
| Au | -1,1450 | + 0,4977 | + 1,0714 | + 1,1125 | + 1,2221 | + 1,3880 | + 1,7833 | 1 |
| Hg | -0,9464 | + 0,2591 | + 0,8728 | + 0,9139 | + 1,0235 | + 1,1894 | + 1,5847 | 2 |
| Tl | -0,4163 | - 0,2910 | + 0,3427 | + 0,9838 | + 0,4963 | + 0,6593 | + 1,0546 | 1 |
| Sb | +0,0022 | - 0,7095 | - 0,0758 | - 0,0347 | + 0,0749 | + 0,2408 | + 0,6361 | 3 |
| Mn | +0,2780 | - 0,9853 | - 0,3436 | - 0,3105 | - 0,2009 | - 0,0350 | + 0,3603 | 2 |
| Fe | +0,2945 | - 1,0018 | - 0,3681 | - 0,3270 | - 0,2176 | - 0,0515 | + 0,3438 | 2 |
| Cu | -0,7073 | (+ 0,8690) | + 0,6337 | + 0,6748 | + 0,7844 | + 0,9503 | + 1,3456 | 1 |
| Sn | -0,0736 | - 0,6337 | (- 0,0819) | + 0,0410 | + 0,1507 | + 0,3166 | + 0,7119 | 2 |
| Cr | -0,0325 | - 0,6745 | - 0,0411 | (- 1,3885) | + 0,1096 | + 0,2750 | + 0,6708 | 2 |
| In | +0,0771 | - 0,7841 | - 0,1507 | - 0,1096 | (+ 0,1925) | + 0,1659 | + 0,5612 | 3 |
| Co | +0,2430 | - 0,9503 | - 0,3160 | - 0,2755 | - 0,1650 | (- 0,5010) | + 0,3953 | 2 |
| Tl | +0,6383 | - 1,3456 | - 0,7119 | - 0,4155 | - 0,5612 | - 0,3953 | (- 2,2055) | 2 |
| K | +0,1204 | - 0,8277 | - 0,1940 | - 0,1529 | - 0,0433 | + 0,1226 | + 0,5179 | 1 |
| Na | +0,2619 | - 0,9692 | - 0,4559 | - 0,2944 | - 0,1848 | - 0,0189 | + 0,3764 | 1 |
| Ca | +0,5514 | - 1,2587 | - 0,6250 | - 0,5839 | - 0,4743 | - 0,3084 | + 0,0869 | 2 |
| Li | +0,7726 | - 1,4793 | - 0,8456 | - 0,8045 | - 0,6949 | - 0,5290 | - 0,1337 | 1 |
| Mg | +1,0463 | - 1,7536 | - 1,1199 | - 1,0788 | - 0,9692 | - 0,8033 | - 0,4080 | 2 |
| Be | +1,1385 | - 1,8458 | - 1,2121 | - 1,1710 | - 1,0614 | - 0,8955 | - 0,5002 | 2 |
| | k(z)j | 1-(2) | 2-(4) | 2-(3) | 3-(2-1) | 2-(3) | 2-3-4 | |
| | u | 4 | 4 | 6 | 4,176 | 6 | 6 | |
| | m | 1-2 | 2-4 | 2 | 3 | 2 | 2-3-4 | |
| | mq | | | | | 3 | | |
| | $\Omega_M$ | + 0,5460 | - 0,3819 | + 0,8235 | + 0,3667 | - 3,1829 | - 1,5587 | |
| | $\Omega_I$ | + 0,2028 | + 1,8923 | + 5,7165 | + 5,4925 | + 0,5591 | + 4,9711 | |
| | $u\Omega_o$ | + 0,0116 | + 3,0208 | +19,632 | + 5,862 | -15,744 | +10,2372 | |
| | $E^{°}_{jx} - E^{°}_{I}$ | - 0,0116 | - 0,6700 | - 1,0906 | - 0,8716 | - 0,8136 | - 1,5133 | |

| $M_y$ | | Ag | Pb | Cd | Zn | Ni |
|---|---|---|---|---|---|---|
| | $E^\circ_{iy}$ | + 0,7956 | - 0,126 | - 0,403 | - 0,763 | - 0,2336 |
| | $\frac{1}{i}\overline{E^\circ_{oy}}$ | - 0,9595 | - 0,2390 | - 0,1016 | + 0,2143 | + 0,3208 |
| Au | -1,1450 | + 0,1855 | + 0,9060 | + 1,6434 | + 1,3593 | + 1,4658 |
| Hg | -0,9464 | - 0,0131 | + 0,7074 | + 0,8448 | + 1,1607 | + 1,2672 |
| Tl | -0,4163 | - 0,5432 | + 0,1773 | + 0,3147 | + 0,6306 | + 0,7371 |
| Sb | +0,0022 | - 0,9617 | - 0,2412 | - 0,1038 | + 0,2121 | + 0,3186 |
| Mn | +0,2780 | - 1,2375 | - 0,5176 | - 0,3796 | - 0,0637 | + 0,0428 |
| Fe | +0,2945 | - 1,2540 | - 0,5335 | - 0,3961 | - 0,0802 | + 0,0263 |
| Cu | -0,7073 | - 0,2522 | + 0,4683 | + 0,6058 | + 0,9216 | + 1,0281 |
| Sn | -0,0736 | - 0,8859 | - 0,1654 | - 0,0279 | + 0,2879 | + 0,3944 |
| Cr | -0,0325 | - 0,9270 | - 0,2065 | - 0,0690 | + 0,8468 | + 0,3533 |
| In | +0,0771 | - 1,0366 | - 0,3161 | - 0,1787 | + 0,1392 | + 0,2437 |
| Co | +0,2430 | - 1,2025 | - 0,4820 | - 0,3446 | - 0,0287 | + 0,0778 |
| Ti | +0,6383 | - 1,5978 | - 0,8773 | - 0,7359 | - 0,4240 | - 0,3175 |
| K | +0,1204 | - 1,0799 | - 0,3594 | - 0,2220 | + 0,0939 | + 0,2004 |
| Na | +0,2619 | - 1,2214 | - 0,5009 | - 0,3635 | - 0,0476 | + 0,0589 |
| Ca | +0,5514 | - 1,5109 | - 0,7904 | - 0,6530 | - 0,3371 | - 0,2306 |
| Li | +0,7726 | - 1,7315 | - 1,0110 | - 0,8736 | - 0,5577 | - 0,4512 |
| Mg | +1,0463 | - 2,0058 | - 1,2853 | - 1,1479 | - 0,8320 | - 0,7255 |
| Be | +1,1385 | - 2,0980 | - 1,3775 | - 1,2401 | - 0,9242 | - 0,8177 |
| | k(z)j | 1 | 2 | 2 | 2 | 2 |
| | | $2E^\circ_{mR} =$ (+ 1,5992) | $2E^\circ_{mR} =$ (- 0,2560) | $2E^\circ_{mR} =$ (-0,8060) | $2E^\circ_{mR} =$ (- 1,5260) | $2E^\circ_{mR} =$ (- 0,4600) |
| | $\Omega_M$ | | | | | |
| | $\Omega_I$ | - 0,5320 | + 2,3864 | + 2,9404 | + 3,6604 | + 2,5944 |
| | $u\Omega_o$ | | | | | |
| | $E^\circ_{jx} - E^\circ_I$ | + 0,266 | - 0,6596 | - 0,9366 | - 1,2966 | - 0,7636 |

0064460

Office européen
des brevets

RAPPORT DE RECHERCHE EUROPEENNE

Numero de la demande

EP 82 40 0765

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int Cl. ³) |
|---|---|---|---|
| X | EP - A - 0 027 755 (COMMISSARIAT A L'ENERGIE ATOMIQUE) <br><br> * revendications 1-4,6; page 5, lignes 5-16 * | 1-4,6, 10,13 | G 02 F 1/17 |
| A | FR - A - 2 356 227 (COMMISSARIAT A L'ENERGIE ATOMIQUE) <br><br> * revendications 1,5,6 * | 1,3,4, 10 | |

DOMAINES TECHNIQUES
RECHERCHES (Int. Cl ³)

G 02 F

Le present rapport de recherche a ete etabli pour toutes les revendications

| Lieu de la recherche | Date d achevement de la recherche | Examinateur |
|---|---|---|
| LA HAYE | 21-07-1982 | DECANNIERE |

BAD ORIGINAL